# EUROPEAN PATENT APPLICATION

(11) **EP 4 641 663 A1**
(43) Date of publication of application: **29.10.2025**
(21) Application number: 23907514.6
(22) Date of filing: 06.12.2023
(51) Int. Cl.: H01M 4/36, H01M 4/525, H01M 4/505, C01G 53/00, H01M 10/052, H01M 4/02

(54) **POSITIVE ELECTRODE ACTIVE MATERIAL FOR LITHIUM SECONDARY BATTERY, METHOD FOR PREPARING SAME, AND LITHIUM SECONDARY BATTERY**

(30) Priority: 20.12.2022 KR 20220179651
(71) Applicant: SAMSUNG SDI CO., LTD., Yongin-si, Gyeonggi-do 17084 (KR)
(72) Inventor: YUN, Pilsang, Yongin-si, Gyeonggi-do 17084 (KR); PARK, Sangin, Yongin-si, Gyeonggi-do 17084 (KR); KIM, Hyunbeom, Yongin-si, Gyeonggi-do 17084 (KR); KIM, Jongmin, Yongin-si, Gyeonggi-do 17084 (KR)
(74) Representative: Gulde & Partner
(86) International application number: PCT/KR2023/020005
(87) International publication number: WO 2024/136228

(57) **Abstract**

Disclosed are a positive electrode active material for a rechargeable lithium battery, a preparation method thereof and a rechargeable lithium battery, the positive electrode active material for a rechargeable lithium battery including a first positive electrode active material in a form of secondary particles including a lithium nickel-cobalt-aluminum-based composite oxide and formed by agglomerating a plurality of primary particles, wherein at least a portion of the primary particles is oriented radially; and a second positive electrode active material in a form of secondary particles including a lithium nickel-cobalt-aluminum-manganese-based composite oxide, and formed by agglomerating a plurality of primary particles, wherein an average particle diameter of secondary particles of the first positive electrode active material is larger than an average particle diameter of the secondary particles of the second positive electrode active material.

## Description

### [Technical Field]

Positive electrode active materials for rechargeable lithium batteries, preparation methods thereof, and rechargeable lithium batteries including the same are disclosed.

### [Background Art]

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Various positive electrode active materials have been investigated to realize rechargeable lithium batteries for applications to the uses. Among them, lithium nickel-based oxide, lithium nickel manganese cobalt composite oxide, lithium nickel cobalt aluminum composite oxide, and lithium cobalt oxide are mainly used as positive electrode active materials.

Recently, high nickel-based positive electrode active materials have been widely used to increase capacity. In addition, in order to increase energy density, many positive electrode active materials are being developed that mix large and small particles of different particle sizes in an appropriate ratio. In this case, a problem occurs that cracks occur inside the particles during the charging and discharging process during long-term cycling. The cracks cause a side reaction between the positive electrode active material and the electrolyte solution, which results in gas generation, reduced safety, and depletion of the electrolyte solution, which also reduces battery performance. Accordingly, there is a need for the development of a positive electrode active material that can exhibit high capacity and long cycle-life characteristics.

### [Disclosure]

### [Technical Problem]

Provided is a positive electrode active material with high capacity, high initial charge and discharge efficiency, and excellent cycle-life characteristics, a method for preparing the same, and a rechargeable lithium battery including the same.

### [Technical Solution]

In an embodiment, provided a positive electrode active material for a rechargeable lithium battery which includes a first positive electrode active material in a form of secondary particles including a lithium nickel-cobalt-aluminum-based composite oxide and formed by agglomerating a plurality of primary particles, wherein at least a portion of the primary particles is oriented radially; and a second positive electrode active material in a form of secondary particles including a lithium nickel-cobalt-aluminum-manganese-based composite oxide, and formed by agglomerating a plurality of primary particles, wherein an average particle diameter of secondary particles of the first positive electrode active material is larger than an average particle diameter of the secondary particles of the second positive electrode active material.

In another embodiment, provided is a method of preparing a positive electrode active material for a rechargeable lithium battery which includes mixing a first positive electrode active material precursor including secondary particles including a nickel-cobalt-aluminum-based composite hydroxide, wherein the secondary particles are formed by agglomerating a plurality of primary particles and at least a portion of the primary particles is oriented radially; a second positive electrode active material precursor including secondary particles including a nickel-cobalt-manganese-based composite hydroxide, wherein the secondary particles are formed by agglomerating a plurality of primary particles; and lithium raw material and performing heat treatment, wherein an average particle diameter of the first positive electrode active material precursor is larger than an average particle diameter of the second positive electrode active material precursor.

In another embodiment, provided is a rechargeable lithium battery including a positive electrode including the positive electrode active material, a negative electrode, and an electrolyte.

### [Advantageous Effects]

The positive electrode active material for a rechargeable lithium battery according to an embodiment has high capacity, high initial charge and discharge efficiency, and excellent cycle-life characteristics.

### [Description of the Drawings]

FIG. 1 is a schematic view showing the shape of a plate-shaped primary particle according to an embodiment.
FIG. 2 is a view for explaining the definition of a radial in secondary particles according to an embodiment.
FIG. 3 is a schematic view showing a cross-sectional structure of a secondary particle according to an embodiment.
FIG. 4 is a schematic view illustrating a rechargeable lithium battery according to an embodiment.
FIGS. 5 and 6 are cross-sectional views schematically showing an all-solid-state rechargeable battery according to an embodiment.
FIG. 7 is a graph showing initial charge/discharge capacity at room temperature for the battery cells and pellet density of the positive electrode active material according to Example 1 and Comparative Examples 1 to 6.
FIG. 8 is a graph showing the initial discharge capacity and 50th capacity retention rate at high temperature for the battery cells of Example 1 and Comparative Examples 1 to 6.
FIG. 9 is a scanning electron microscope (SEM) image of the isolated small particles of Example 1.
FIG. 10 is an SEM image of the separated small particles of Comparative Example 2.
FIG. 11 is a graph showing the contents of Co, Al, and Mn as a result of inductively coupled plasma luminescence analysis (ICP) for the small particles of Example 1 and the small particles of Comparative Example 2.
FIG. 12 is an SEM image of a cross-section of the first lithium nickel-based composite oxide particle prepared in Reference Example 1 cut with a focused ion beam (FIB).
FIG. 13 is an SEM image of a cross-section of the third lithium nickel-based composite oxide particle prepared in Reference Example 3 cut with FIB.
FIG. 14 is an SEM image of the surface of the first lithium nickel-based composite oxide particle prepared in Reference Example 1.
FIG. 15 is an SEM image of the surface of the second lithium nickel-based composite oxide particle prepared in Reference Example 2.
FIG. 16 is an SEM image of the surface of particles corresponding to the large particles of the positive electrode active material of Example 1.
FIG. 17 is an SEM image of the surface of particles corresponding to small particles among the positive electrode active material of Example 1.
FIG. 18 is an SEM image of the surface of particles corresponding to the large particles among the positive electrode active materials of Comparative Example 1.
FIG. 19 is an SEM image of the surface of particles corresponding to small particles among the positive electrode active material of Comparative Example 1.
FIG. 20 shows SEM images (top row) of the positive electrode active materials prepared in Example 1, Comparative Example 2, and Comparative Example 6, and images (bottom row) showing the distribution of Al as a result of energy dispersive X-ray spectroscopy (EDS) thereof.
FIG. 21 is an enlarged SEM image (left) of the portion marked with a white square box of Comparative Example 2 in FIG. 20 and an image (right) showing Al distribution by EDS.
FIG. 22 is an enlarged SEM image (left) of the portion marked with a white square box of Comparative Example 6 in FIG. 20 and an image (right) showing Al distribution by EDS.
FIG. 23 is a transmission electron microscope (TEM) image of a cross-section of the second positive electrode active material of Comparative Example 6.
FIG. 24 is an enlarged image of the yellow square box in FIG. 23.
FIG. 25 is a TEM image of a cross-section of the second positive electrode active material of Example 1.

### [Mode for Invention]

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution. As used herein, when a definition is not otherwise provided, the average particle diameter means a diameter (D50) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

### Positive Electrode Active Material

The positive electrode active material for a rechargeable lithium battery according to an embodiment includes a first positive electrode active material and a second positive electrode active material. The first positive electrode active material has a form of a secondary particle including a lithium nickel-cobalt-aluminum-based composite oxide, in which a plurality of primary particles are agglomerated, wherein at least a portion of the primary particles is oriented radially. The second positive electrode active material has a form of a secondary particle including a lithium nickel-cobalt-aluminum-manganese-based composite oxide, in which a plurality of primary particles are agglomerated. In addition, an average particle diameter of secondary particles of the first positive electrode active material is larger than an average particle diameter of the secondary particles of the second positive electrode active material. The first positive electrode active material may be expressed as large particles, and the second positive electrode active material may be expressed as small particles. These positive electrode active materials can achieve high capacity, have high initial charge and discharge efficiency, and at the same time have excellent room temperature and high temperature cycle-life characteristics.

In the first positive electrode active material, the lithium nickel-cobalt-aluminum-based composite oxide refers to an oxide including lithium, nickel, cobalt, and aluminum, and optionally further including other elements, and may be expressed as Ni-Co-Al or NCA. In the second positive electrode active material, the lithium nickel-cobalt-aluminum-manganese-based composite oxide refers to an oxide including lithium, nickel, cobalt, aluminum, and manganese and optionally further including other elements, and may be expressed as Ni-Co-Al-Mn or NCAM. In the method for preparing a positive electrode active material to be described later, the nickel-cobalt-manganese-based hydroxide, which is the precursor of the second positive electrode active material, refers to a hydroxide including nickel, cobalt, and manganese and optionally other elements, and may be expressed as an Ni-Co-Mn precursor or an NCM precursor.

The positive electrode active material may be prepared through a method of mixing an NCA precursor, which is a first positive electrode active material precursor, and an NCM precursor, which is a precursor of a second positive electrode active material, with a lithium raw material and co-firing them. In the co-firing process, an Al component of the first positive electrode active material precursor, which is a large particle and is in the form of radial secondary particles, moves or diffuses into the precursor of the second positive electrode active material, which is a small particle and is in the form of secondary particles, thereby converting the second positive electrode active material into NCAM. Conversely, an Mn component of the second positive electrode active material precursor does not diffuse into the first positive electrode active material precursor, and thus the first positive electrode active material does not become NCAM but can be maintained as NCA.

In the positive electrode active material prepared in this way, the second positive electrode active material has different shape and composition distribution from the case where the positive electrode active material is simply prepared using the NCAM composition precursor, or the NCAM positive electrode active material that is coated or doped with Al by post-treatment with Al raw material after preparing the NCM positive electrode active material, and are also more excellent capacity and cycle-life characteristics than the aforementioned case.

In addition, the positive electrode active material prepared by the existing method of firing the first positive electrode active material precursor and the second positive electrode active material precursor separately and then mixing them rather than co-firing them has different shape and composition distribution from the positive electrode active material according to an embodiment, a volumetric capacity of the battery is reduced due to the low pellet density, there is a problem of low cycle-life characteristics due to the different deterioration rates of large and small particles, and even if the structural stability is increased by separately doping or coating the second positive electrode active material with Al, there is a problem of capacity decrease due to the addition of Al raw material. Features such as shape and composition distribution of the positive electrode active material according to an embodiment will be described in detail later, and the preparing method will also be described in detail below.

### First Positive Electrode Active Material

The first positive electrode active material includes lithium nickel-cobalt-aluminum-based composite oxide, and this compound may be represented by Chemical Formula 1.

[Chemical Formula 1] Liₐ₁Niₓ₁Co_{y1}Al_{z1}M¹_{w1}O_{2-b1}X_{b1}

In Chemical Formula 1, 0.9≤a1≤1.2, 0.7≤x1<1, 0<y1<0.3, 0<z1<0.3, 0≤w1<0.3, 0.9≤x1+y1+z1+w1 ≤1.1, and 0≤b1 ≤0.1, M¹ is one or more element selected from B, Ba, Ca, Ce, Cr, Cu, Fe, Mg, Mo, Nb, Si, Sn, Sr, Ti, V, W, and Zr, and X is one or more element selected from F, P, and S.

In Chemical Formula 1, for example 0.7≤x1≤0.98, 0.01≤y1≤0.29, 0.01≤z1≤0.29, 0≤w1≤0.28; 0.8≤x1≤0.98, 0.01≤y1≤0.19, 0.01≤z1≤0.19, 0≤w1≤0.18; or 0.9≤x1≤0.98, 0.01≤y1≤0.09, 0.01≤z1≤0.09, 0≤w1≤0.08.

The first positive electrode active material is in the form of secondary particles in which a plurality of primary particles are agglomerated, and the secondary particles may have spherical, elliptical, polygonal, or irregular shapes. The first positive electrode active material is a large particle, and the average particle diameter of the secondary particles may be 9 µm to 25 µm, for example 9 µm to 20 µm, or 10 µm to 18 µm. Herein, the average particle diameter of the secondary particles may be obtained by selecting about 20 particles at random among the large particles in the SEM image of the positive electrode active material, measuring the particle diameter (diameter, long axis, or length of the long axis) to obtain the particle size distribution, and taking the diameter (D50) of particles with a cumulative volume of 50 volume% as the average particle diameter in the particle size distribution.

The average particle diameter of the primary particles constituting the secondary particles of the first positive electrode active material may be less than 200 nm, for example, greater than or equal to 50 nm and less than 200 nm, greater than or equal to 100 nm and less than 200 nm, greater than or equal to 50 nm and less than or equal to 190 nm, or greater than or equal to 50 nm and less than or equal to 180 nm. When the average particle diameter of the primary particles satisfies the above range, the lithium diffusion path is shortened, thereby reducing resistance and improving charge/discharge efficiency. Herein, the average particle diameter of the primary particles refers to the size of the primary particles observed on the surface of the secondary particles and may be obtained by selecting about 20 primary particles from the SEM image of the surface of the secondary particles, measuring their particle diameter (diameter, long axis, or length of long axis), and then calculating their arithmetic mean.

At least a portion of the primary particles of the secondary particles of the first positive electrode active material are oriented radially. In this case, the diffusion of lithium increases, improving initial charging and discharging efficiency and securing high capacity. Uniform expansion and contraction may be possible during the intercalation and deintercalation process of lithium, thereby improving the problem of the positive electrode active material breaking during charging and discharging to improve cycle-life characteristics and safety of a battery. In addition, when the first positive electrode active material is in the form of secondary particles in which at least a portion of the primary particles are oriented radially, in the method for preparing the positive electrode active material according to an embodiment, it is advantageous for the Al component to diffuse from the precursor of the first positive electrode active material into the second positive electrode active material precursor, and as a result, a positive electrode active material with improved capacity characteristics, initial charge/discharge efficiency, and cycle-life characteristics can be prepared.

Hereinafter, the radial structure will be described in detail.

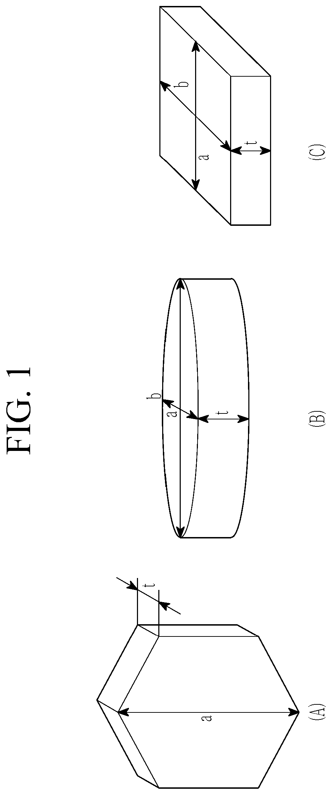

At least some of the primary particles may have a plate shape. FIG. 1 is a schematic view showing the plate shape of primary particles. Referring to FIG. 1, the primary particles have various detailed shapes while having a basic plate structure, for example, (A) a polygonal nanoplate shape such as a hexagon, (B) a nanodisk shape, and (C) a rectangular parallelepiped shape.

In FIG. 1, "a" means the length of the long axis of the primary particle, "b" means the length of the short axis, and "t" means the thickness. Herein, the length (a) of the long axis may mean a maximum length based on the widest surface of the primary particle. Thickness (t) may be a maximum length of the surface that is approximately perpendicular to the widest surface of the primary particle. The direction including the length (a) of the long axis and the length (b) of the short axis is defined as the plane direction, and the direction in which the thickness (t) is defined is defined as the thickness direction.

The thickness (t) of the primary particle may be smaller than the length (a) of the long axis and length (b) of the short axis, which are the lengths in the plane direction. Among the lengths in the plane direction, the length (a) of the long axis may be longer or the same as the length (b) of the short axis.

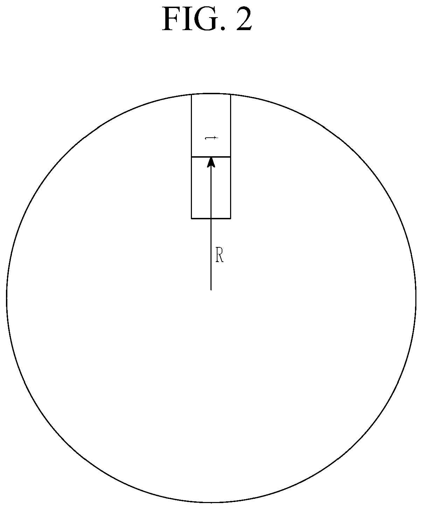

That the primary particles are oriented radially may mean, for example, that the long axis of the primary particles is oriented in a radial direction. FIG. 2 is a view for explaining the definition of a radial. In an embodiment, the radially oriented structure means that, as shown in FIG. 2, the thickness (t) direction of the primary particles is perpendicular to or within an angle of ± 5° of perpendicular to the direction (R) from the secondary particles from the center to the surface of the secondary particles.

In this case, when at least some of the primary particles are oriented radially, the surface of the secondary particles can have relatively many lithium diffusion passages between the primary particles, and many crystal planes capable of lithium transfer are exposed to the outside, improving lithium diffusion and securing high initial efficiency and high capacity. Additionally, if the primary particles are oriented radially, the pores exposed on the surface of the secondary particle are directed toward the center of the secondary particle, which can further promote the diffusion of lithium. In addition, the radially oriented primary particles enable uniform expansion and contraction during intercalation and deintercalation of lithium, and pores exist in the direction of the Miller index (001) plane, which is the direction in which the particles expand when lithium is desorbed, which acts as a buffer. As a result, the probability of cracks occurring when the positive electrode active material contracts and expands is lowered, and the internal pores further alleviate volume changes, which reduces cracks that occur between primary particles during charging and discharging, ultimately improving cycle-life characteristics of rechargeable lithium batteries and reducing the increase in resistance.

As an example, the secondary particle may include an internal portion having an irregular porous structure and an external portion having a radially oriented structure as a region surrounding the internal portion.

The irregular porous structure means that the structure has primary particles and pores, but the pore size, shape, location, etc. are not regular. That is, the primary particles in the internal portion may be oriented without regularity, unlike the primary particles in the external portion. The term "external portion" may refer to a region within 30 length% to 50 length% from the outermost surface, for example, within 40 length% from the outermost surface with respect to a total distance from the center to the surface of the secondary particle, or in an embodiment, may refer to a region within 3 µm from the outermost surface of the secondary particle. The term "internal portion" may refer to a region within 50 length% to 70 length% from the center, for example, within 60 length% from the center with respect to a total distance from the center to the surface of the secondary particle, or in an embodiment, a region excluding the region within 3 µm from the outermost surface of the secondary particle.

Additionally, pores in the internal portion of the secondary particle may be larger than pores in the external portion of the secondary particle. For example, the size of the pores in the internal portion may be 150 nm to 1 µm, and the size of the pores in the external portion may be less than 150 nm. In this way, if the pore size in the internal portion is larger than that in the external portion, there is an advantage that the lithium diffusion distance inside the positive electrode active material is shortened compared to secondary particles where the pore sizes in the internal and external portions are the same, and intercalation of lithium from the external portion is easy, it has an effect of alleviating volume changes that occur during charging and discharging. Herein, the size of the pore means the diameter if the pore is spherical or circular, and the length of the long axis if the pore is oval. The size of the pores may be a value obtained by arbitrarily measuring the sizes of about 20 pores in an SEM image of the cross-section of a secondary particle and then calculating the arithmetic average thereof.

The secondary particles may have open pores on the surface. The open pore size may be less than 150 nm, for example, 10 nm to 148 nm. The open pore is a pore in which some of the walls of the pore are not closed, and is formed by the space between radially oriented plate-shaped primary particles, and is a pore deeply connected from the surface of the secondary particle toward the center. These open pores are connected to the outside and can become passages through which substances can enter and exit. The open pores may be in the form of facing the center on the surface of the secondary particle, and may be formed to a depth of less than or equal to 150 nm, for example, 0.001 nm to 100 nm, for example, 1 nm to 50 nm on average from the surface of the secondary particle. The size and depth of the open pores may be measured by the BJH (Barrett, Joyner and Halenda) method, which is a method derived through the adsorption or desorption content of nitrogen.

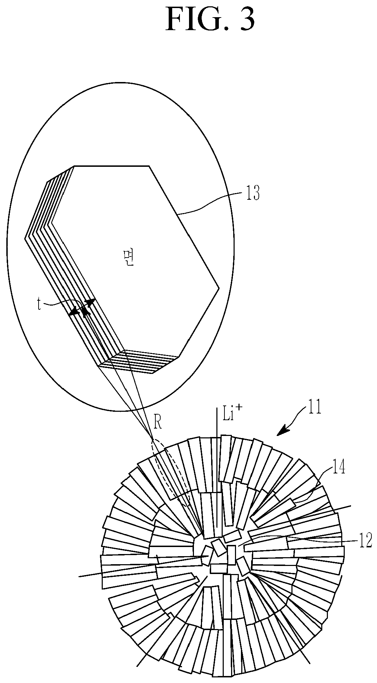

FIG. 3 is a schematic view showing the cross-sectional structure of secondary particle of positive electrode active material. Referring to FIG. 3, the secondary particle 11 has an external portion 14 where plate-shaped primary particles 13 are oriented in a radial direction, and an internal portion 12 where the primary particles 13 are irregularly oriented. The internal portion 12 may have more empty spaces between primary particles than the external portion. Additionally, the pore size and porosity in the internal portion 12 are larger than those in the external portion, and the shape may be irregular. In FIG. 3, the arrow indicates the direction of movement of lithium ions.

The secondary particles have a porous structure in the internal portion, which has the effect of reducing the diffusion distance of lithium ions to the internal portion, and in the external portion, the primary particles are oriented radially, making it easy for lithium ions to be inserted into the surface. Additionally, the size of the primary particles is small, making it easier to secure a lithium transfer path between crystal grains. Additionally, the size of the primary particles is small and the pores between the primary particles alleviate the volume change that occurs during charging and discharging, thereby minimizing the stress caused by the volume change during charging and discharging. These positive electrode active materials can reduce the resistance of rechargeable lithium batteries and improve capacity characteristics and cycle-life characteristics.

The first positive electrode active material may be included in an amount of 60 wt% to 95 wt%, for example 70 wt% to 90 wt%, based on 100 wt% of the positive electrode active material for a rechargeable lithium battery. When the first positive electrode active material is included within the above content range, a positive electrode active material with an optimal composition may be prepared while increasing the pellet density of the positive electrode active material and the energy density of the positive electrode.

### Second Positive Electrode Active Material

The second positive electrode active material may be in the form of secondary particles in which a plurality of primary particles are agglomerated, and may be a small particle, and the average particle diameter of the secondary particles may be 2 µm to 8 µm, for example 2.5 µm to 7 µm, or 3 µm to 6 µm.

The second positive electrode active material includes a lithium nickel-cobalt-aluminum-manganese-based composite oxide, and this compound may be represented by Chemical Formula 2.

[Chemical Formula 2] Liₐ₂Niₓ₂Co_{y2}Al_{z2}Mn_{w2}M²ᵥ₂O_{2-b2}X_{b2}

In Chemical Formula 2, 0.9≤a2≤1.2, 0.7≤x2<1, 0<y2<0.3, 0<z2<0.3, 0<w2<0.3, 0≤v2<0.3, 0.9≤x2+y2+z2+w2+v2≤1.1, and 0≤b2≤0.1, M² is one or

more element selected from B, Ba, Ca, Ce, Cr, Cu, Fe, Mg, Mo, Nb, Si, Sn, Sr, Ti, V, W, and Zr, and X is one or more element selected from F, P, and S. In Chemical Formula 2, for example 0.7≤x2≤0.979, 0.01≤y2≤0.289, 0.001≤z2≤0.289, 0.01≤w2≤0.289, 0≤v2≤0.279; 0.8≤x2≤0.979, 0.01≤y2≤0.189, 0.001≤z2≤0.189, 0.01≤w2≤0.189, 0≤v2≤0.179; or 0.9≤x2≤0.979, 0.01≤y2≤0.089, 0.001≤z2≤0.089, 0.01≤w2≤0.089, 0≤v2≤0.079.

The second positive electrode active material starts as an NCM precursor and becomes NCAM composition by receiving Al component from the first positive electrode active material during the firing process. As described above, the shape and composition distribution are different from those in which the positive electrode active material was manufactured using the NCAM precursor. For example, the second positive electrode active material may have a higher aluminum content in the surface layer of the secondary particles than the aluminum content in the internal portion of the secondary particles.

In the second positive electrode active material, the "internal portion" of the secondary particle may refer to a region from the center of the secondary particle to 70 length% of the radius, and the "surface layer" of the secondary particle refers to a region surrounding the internal portion, which refers to refer to a region from the outermost surface of the secondary particle to a depth corresponding to 30% of the length of the radius.

The content of elements such as Al in the internal portion or surface layer of the secondary particles of the second positive electrode active material may be measured through TEM-EELS (Transmission Electron Microscope - Electron Energy Loss Spectroscopy) analysis of a cross-section of the secondary particle cut with a focused ion beam (FIB). Additionally, the aluminum content may mean the at% content of aluminum based on 100 at% of total metal excluding lithium.

For example, in the second positive electrode active material, the aluminum content in the surface layer of the secondary particle may be 0.2 at% to 2 at% based on a total metal excluding lithium, the aluminum content in the internal portion of the secondary particle may be 0 at% to 0.6 at% based on a total metal excluding lithium, and the aluminum content in the surface layer may be higher than the aluminum content in the internal portion.

In addition, in the second positive electrode active material according to an embodiment, in the surface layer of the secondary particle, the aluminum content in the portion that contacts the first positive electrode active material may be higher than the aluminum content in the portion that does not contact the first positive electrode active material. This is understood to be because the Al component is received from the first positive electrode active material, and it is also a feature that distinguishes it from the case of using the NCAM precursor as small particles or the case of separately coating or doping Al.

For example, in the surface layer of the secondary particles of the second positive electrode active material, the aluminum content based on a total metal excluding lithium in the portion in contact with the first positive electrode active material may be 0.8 at% to 2.0 at%, for example, 0.8 at% to 1.8 at%, or 0.9 at% to 1.6 at%. The aluminum content based on a total metal excluding lithium in the portion not in contact with the first positive electrode active material may be less than 0.8 at%, for example, 0 at% to 0.7 at%, or 0.1 at% to 0.6 at%.

As another expression, it may be referred to that the second positive electrode active material according to an embodiment includes a high-concentration Al region and a low-concentration Al region in the surface layer of the secondary particle. In the high-concentration Al region, the aluminum content based on a total metal excluding lithium may be 0.8 at% to 2.0 at%, for example, 0.8 at% to 1.8 at%, or 0.9 at% to 1.6 at%. In the low-concentration Al region, the aluminum content based on a total metal excluding lithium aluminum may be less than 0.8 at%, for example, 0 at% to 0.7 at%, or 0.1 at% to 0.6 at%.

Additionally, a difference between the aluminum content in the high-concentration Al region and the aluminum content in the low-concentration Al region may be 0.3 at% to 2.0 at%, for example, 0.4 at% to 1.8 at%, or 0.5 at% to 1.5 at%.

It is well known that after preparing a lithium metal composite oxide, doping or coating Al separately by mixing aluminum raw materials and heat treating them is well known. However, in this case, unreacted Al raw material, for example, aluminum oxide such as Al₂O₃, remains in the final positive electrode active material, and as Al is doped unevenly on the surface of the particle, a high concentration of Al doped at a level exceeding 2 at% is created on some portions of the surface, which causes the problem of reduced capacity. Unlike this, in the positive electrode active material according to an embodiment, no separate Al raw material is added during the firing process, and therefore, in the final positive electrode active material, unreacted Al raw materials such as aluminum oxide do not exist on the outermost surfaces of the secondary particles of each of the first and second positive electrode active materials. In addition, even in a region with high Al content in the surface layer of the second positive electrode active material, the Al content appears to be less than or equal to 2 at%, and the difference in Al content between the high-concentration Al area and the low-concentration Al area is also small, at less than or equal to 2 at%. Accordingly, the second positive electrode active material according to an embodiment has structural stability and performance improvement effects due to Al doping, and problems such as capacity reduction caused by adding Al raw material during firing can be effectively suppressed.

The second positive electrode active material, which is a small particle, may be included in an amount of 5 wt% to 40 wt%, for example, 10 wt% to 30 wt%, based on 100 wt% of the positive electrode active material for a rechargeable lithium battery. When the second positive electrode active material is included in the above content range, a positive electrode active material with an optimal composition may be prepared while increasing the pellet density of the positive electrode active material and the energy density of the positive electrode.

### Method of Preparing Positive Electrode Active Material

Hereinafter, the method of preparing a positive electrode active material will be described in detail.

In an embodiment, a method of preparing a positive electrode active material for a rechargeable lithium battery includes a first positive electrode active material precursor including secondary particles including a nickel-cobalt-aluminum-based composite hydroxide, wherein the secondary particles are formed by agglomerating a plurality of primary particles and at least a portion of the primary particles is oriented radially; a second positive electrode active material precursor including secondary particles including a nickel-cobalt-manganese-based composite hydroxide, wherein the secondary particles are formed by agglomerating a plurality of primary particles; and a lithium raw material and performing heat treatment, wherein an average particle diameter of the first positive electrode active material precursor is larger than an average particle diameter of the second positive electrode active material precursor.

The above preparing method may be a method of co-firing the NCA precursor of large radial secondary particles and the NCM precursor of small secondary particles by mixing them with lithium raw materials. In the process of co-firing, the large particle Al component diffuses or moves into the small particles, making the small particles into the NCAM composition, and thus a positive electrode active material that is a mixture of NCA of the large radial secondary particles and NCAM of the small secondary particles may be prepared. In the temperature range of co-firing, the diffusion rate of the Al component of the large particle is faster than that of the Mn of the small particles, and the Al component is more easily transferred to the small particles as the large particle precursor has the form of radial secondary particles. The final positive electrode active material prepared in this way can exhibit high capacity, high initial charge/discharge efficiency, and excellent cycle-life characteristics.

According to the above preparing method, the volumetric capacity may be greatly improved compared to the existing method in which large and small particles are individually fired and then mixed, and the initial discharge capacity, volumetric capacity, and energy density may be further improved compared to the case where only the small particles are doped or coated with Al after individual firing and the small particles and large particles are mixed. In addition, according to the method according to an embodiment, even if the co-firing method is applied, cycle-life characteristics may be improved compared to the case of using large and small particles having the same components, and initial discharge capacity and energy density may be improved compared to the case of separately doping or coating Al after co-firing. In the method of preparing a positive electrode active material according to an embodiment, an appropriate amount of aluminum is introduced into the large and small particles without mixing aluminum raw materials during or after the co-firing process, thereby ensuring structural stability, and improving capacity reduction problem caused by the addition of aluminum raw materials.

The nickel-cobalt-aluminum-based composite hydroxide, which is the first positive electrode active material precursor, may be specifically represented by Chemical Formula 11.

[Chemical Formula 11] Niₓ₁₁CO_{y11}Al_{z11}M¹¹_{w11}(OH)₂

In Chemical Formula 11, 0.7≤x11<1, 0<y11<0.3, 0<z11<0.3, 0≤w11<0.3, 0.9≤x11+y11+z11+w11 ≤1.1, and M¹¹ is one or more elements selected from B, Ba, Ca, Ce, Cr, Cu, Fe, Mg, Mo, Nb, Si, Sn, Sr, Ti, V, W, and Z.

The first positive electrode active material precursor may be made by agglomerating a plurality of primary particles, and may be in the form of secondary particles in which at least a portion of the primary particles are radially oriented. The average particle diameter of the secondary particles may be 9 µm to 25 µm, for example, 9 µm to 20 µm, or 10 µm to 18 µm. Herein, the average particle diameter of the secondary particles may be obtained by selecting about 20 particles at random in the SEM image of the first positive electrode active material precursor, measuring the particle diameter (diameter, long axis, or length of the long axis) to obtain the particle size distribution, and taking the diameter (D50) of particles with a cumulative volume of 50 volume% as the average particle diameter in the particle size distribution.

The first positive electrode active material precursor may be prepared through a co-precipitation reaction. That is, a composite metal raw material is prepared by mixing metal raw materials such as nickel raw materials, and a complexing agent and a pH controlling agent are added thereto to proceed with the co-precipitation reaction while controlling the pH of the mixture to produce a nickel-based composite hydroxide of the desired composition. The complexing agent plays a role in controlling the reaction rate of precipitate formation in the co-precipitation reaction, and may be, for example, ammonium hydroxide (NH₄OH) or citric acid. The pH controlling agent may be, for example, sodium hydroxide (NaOH), sodium carbonate (Na₂CO₃), sodium oxalate (Na₂C₂O₄), and the like. The pH of the mixture may be, for example, adjusted to range from 10 to 13.

The co-precipitation reaction may proceed in several steps, for example, in 2 steps, 3 steps, or 4 steps. At each step, the concentration of the complexing agent, the input rates of the metal raw materials, the pH control range, reaction temperature, reaction time, or stirring power may be adjusted differently. Through this adjustment, it is possible to prepare a positive electrode active material precursor in the form of secondary particles in which at least a portion of the primary particles are radially oriented, and also to prepare secondary particles with different internal and external shapes.

For example, the first positive electrode active material precursor having a radial structure can be for example manufactured by the following method. The method of preparing the first positive electrode active material precursor may include a first process, a second process, and a third process for forming a core, an intermediate layer, and a shell in that order. In the first process, the complexing agent, pH controlling agent, and metal raw materials are added to the reactor and reacted. At this time, the concentration of the complexing agent may be 0.1 M to 0.7 M and the input amount may be 6 mL/min to 12 mL/min. The concentrations of the metal raw materials may be 0.1 M to 3.5 M and the input amounts thereof may be 50 mL/min to 100 mL/min. Subsequently, in the second process, the complexing agent, pH controlling agent, and metal raw materials are further added. At this time, the concentration of the complexing agent may be 0.3 M to 1.0 M and the input amount thereof may be 8 mL/min to 15 mL/min. The concentrations of the metal raw materials may be 0.1 M to 3.5 M and the input amounts thereof may be 60 mL/min to 120 mL/min. Then, in the third process, the concentrations and input amounts of the complexing agent and metal raw material are further increased or kept the same, so that the particle growth rate does not decrease. At this time, the concentration of the complexing agent may be 0.35 M to 1.0M and the input amount thereof may be 12 mL/min to 20 mL/min. The concentration of the metal raw materials may be 0.1 M to 3.5 M and the input amounts thereof may be 70 mL/min to 150 mL/min. In the first to third processes, pH may be adjusted between 10 and 12.

The nickel-cobalt-manganese-based composite hydroxide, which is a second positive electrode active material precursor, may be specifically represented by Chemical Formula 12.

[Chemical Formula 12] Niₓ₁₂Co_{y12}Mn_{w12}M¹²ᵥ₁₂(OH)₂

In Chemical Formula 12, 0.7≤x12<1, 0<y12<0.3, 0<w12<0.3, 0≤v12<0.3, 0.9≤x12+y12+w12+v12≤1.1, and M¹² is one or more elements selected from B, Ba, Ca, Ce, Cr, Cu, Fe, Mg, Mo, Nb, Si, Sn, Sr, Ti, V, W, and Zr.

The second positive electrode active material precursor may be in the form of secondary particles in which a plurality of primary particles are agglomerated. The average particle diameter of the secondary particles may be 2 µm to 8 µm, for example 2.5 µm to 7 µm, or 3 µm to 6 µm. Herein, the average particle diameter of the secondary particles may be obtained by selecting about 20 particles at random among the large particles in the SEM image of the second positive electrode active material precursor, measuring the particle diameter (diameter, long axis, or length of the long axis) to obtain the particle size distribution, and taking the diameter (D50) of particles with a cumulative volume of 50 volume% as the average particle diameter in the particle size distribution.

The second positive electrode active material precursor may be prepared through a general co-precipitation reaction.

A mixing weight ratio of the first positive electrode active material precursor and the second positive electrode active material precursor may be 60:40 to 95:5, or 70:30 to 90:10.

The lithium raw material may be, for example, Li₂CO₃, LiOH, hydrates thereof, or a combination thereof. The lithium raw material may be mixed in an amount of 90 parts by mole to 120 parts by mole based on 100 parts by mole of the total metal in the first positive electrode active material precursor and the second positive electrode active material precursor.

The heat treatment may be performed at, for example, 600 °C to 1000 °C, or 700 °C to 900 °C. In the above temperature range, the first positive electrode active material and the second positive electrode active material may have each optimal composition.

For example, the heat treatment may include a temperature increase step and a temperature maintenance step, and the temperature increase time may be set to be longer than the temperature maintenance time. For example, the temperature increase time may be 6 to 16 hours and the temperature maintenance time may be 1 hour to 9 hours, and the temperature increase time may be longer than the temperature maintenance time. In the heat treatment, the temperature increase time may be, for example, 6 hours to 15 hours, 6 hours to 14 hours, 6 hours to 13 hours, or 7 hours to 12 hours, and the temperature maintenance time may be 2 hours to 9 hours, or 3 to 8 hours. Additionally, the ratio of (temperature increase time):(temperature maintenance time) may be 1.1:1 to 10:1, for example, 1.1:1 to 8:1, 1.1:1 to 6:1, 1.1:1 to 5:1, or 1.1:1 to 4:1.

### Positive Electrode

In an embodiment, a positive electrode for a rechargeable lithium battery including the aforementioned positive electrode active material is provided. The positive electrode for a rechargeable lithium battery includes a current collector and a positive electrode active material layer on the current collector, and the positive electrode active material layer includes the aforementioned positive electrode active material and may further include a binder and/or a conductive material.

The binder improves binding properties of positive electrode active material particles with one another and with a current collector and examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The content of the binder in the positive electrode active material layer may be 0.1 wt% to 5 wt% based on the total weight of the positive electrode active material layer.

The conductive material is included to provide electrode conductivity and any electrically conductive material may be used as a conductive material unless it causes a chemical change and examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

A content of the conductive material in the positive electrode active material layer may be 0.1 wt% to 5 wt% based on the total weight of the positive electrode active material layer.

An aluminum foil may be used as the positive electrode current collector, but is not limited thereto.

### Rechargeable Lithium Battery

In an embodiment, a rechargeable lithium battery includes the aforementioned positive electrode including a positive electrode active material, a negative electrode, and an electrolyte. Herein, the rechargeable lithium battery may be understood as a general concept, such as a lithium ion battery using a non-aqueous electrolyte solution, a lithium metal battery using lithium metal as the negative electrode, and an all-solid-state rechargeable battery with a solid electrolyte layer between the positive and negative electrodes.

### Lithium Ion Battery

In some embodiments, a lithium ion battery using a non-aqueous electrolyte solution as an electrolyte is described while applying the aforementioned positive electrode active material.

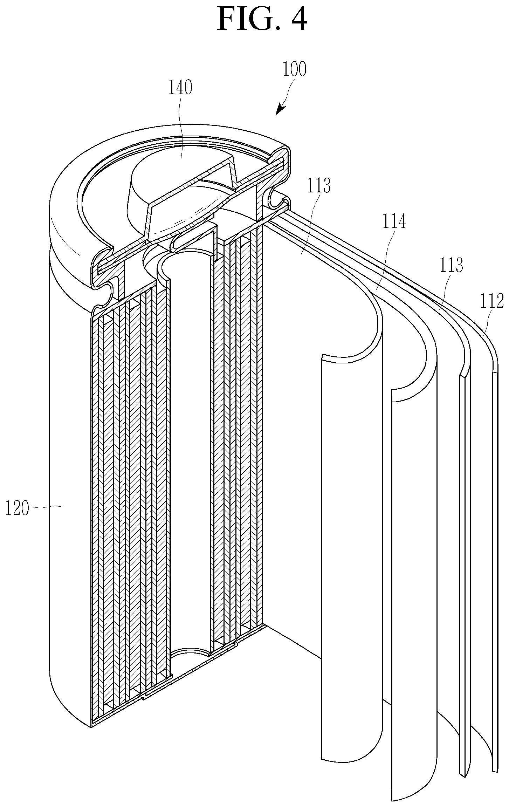

FIG. 4 is a schematic view illustrating a rechargeable lithium battery according to an embodiment. Referring to FIG. 4, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte for a rechargeable lithium battery impregnating the positive electrode 114, negative electrode 112, and separator 113, a battery case 120 housing the battery cell, and a sealing member 140 sealing the battery case 120.

### Negative Electrode

A negative electrode for a rechargeable lithium battery includes a current collector and a negative electrode active material layer on the current collector. The negative electrode active material layer may include a negative electrode active material, and may further include a binder and/or a conductive material.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite and the amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative electrode active material may include Sn, SnO₂, an Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

As an example, the negative electrode active material may include silicon-carbon composite particles. An average particle diameter (D50) of the silicon-carbon composite particles may be, for example, 0.5 µm to 20 µm. The average particle diameter (D50) is measured with a particle size analyzer and means the diameter of particles with a cumulative volume of 50 volume% in the particle size distribution. Based on 100 wt% of the silicon-carbon composite particles, silicon may be included at 10 wt% to 60 wt% and carbon may be included at 40 wt% to 90 wt%. For example, the silicon-carbon composite particle may include a core including silicon particles, and a carbon coating layer located on the surface of the core. The average particle diameter (D50) of the silicon particles in the core may be 10 nm to 1 µm, or 10 nm to 200 nm. The silicon particles may exist as silicon alone, in the form of a silicon alloy, or in an oxidized form. The oxidized form of silicon can be expressed by SiOₓ (0<x<2). Additionally, a thickness of the carbon coating layer may be about 5 nm to 100 nm.

As an example, the silicon-carbon composite particle may include a core including silicon particles and crystalline carbon, and a carbon coating layer located on the surface of the core and including amorphous carbon. For example, in the silicon-carbon composite particle, amorphous carbon may not exist in the core but only in the carbon coating layer. The crystalline carbon may be artificial graphite, natural graphite, or a combination thereof, and the amorphous carbon may be formed from coal-based pitch, mesophase pitch, petroleum-based pitch, coal-based oil, heavy petroleum oil, or a polymer resin (phenolic resin, furan resin, polyimide). At this time, the crystalline carbon content may be 10 wt% to 70 wt%, and the amorphous carbon content may be 20 wt% to 40 wt% based on 100 wt% of the silicon-carbon composite particles.

In the silicon-carbon composite particle, the core may include pores in the center. The radius of the pores may be 30% to 50% of the radius of the silicon-carbon composite particle.

The aforementioned silicon-carbon composite particles effectively suppress problems such as volume expansion, structural collapse, or particle crushing due to charging and discharging, prevent disconnection of conductive paths, achieve high capacity and high efficiency and is advantageous for use in high voltage or fast charging conditions.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of 1:99 to 90:10.

In the negative electrode active material layer, the negative electrode active material may be included in an amount of 95 wt% to 99 wt% based on the total weight of the negative electrode active material layer.

In an embodiment, the negative electrode active material layer further includes a binder, and may optionally further include a conductive material. An amount of the binder in the negative electrode active material layer may be 1 wt% to 5 wt% based on the total weight of the negative electrode active material layer. In addition, when the conductive material is further included, the negative electrode active material layer may include 90 wt% to 98 wt% of the negative electrode active material, 1 wt% to 5 wt% of the binder, and 1 wt% to 5 wt% of the conductive material.

The binder serves to well adhere the negative electrode active material particles to each other and also to adhere the negative electrode active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included as a type of a thickener. As the cellulose-based compound, one or more of carboxymethyl cellulose, hydroxypropylmethyl cellulose, methyl cellulose, or alkali metal salts thereof may be mixed and used. The alkali metal may be Na, K, or Li. The amount of the thickener used may be 0.1 parts by weight to 3 parts by weight based on 100 parts by weight of the negative electrode active material.

The conductive material is included to provide electrode conductivity and any electrically conductive material may be used as a conductive material unless it causes a chemical change and examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum silver, and the like; a conductive polymer such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal, and a combination thereof.

### Electrolyte

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in a mixture and when the organic solvent is used in a mixture, the mixture ratio may be controlled in accordance with a desirable battery performance.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte solution may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

The aromatic hydrocarbon-based solvent may be an aromatic hydrocarbon-based compound represented by Chemical Formula I.

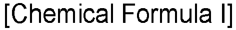

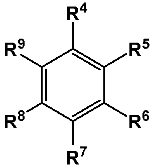

In Chemical Formula I, R⁴ to R⁹ are the same or different and are selected from hydrogen, a halogen, a C1 to C10 alkyl group, a C1 to C10 haloalkyl group, and a combination thereof.

Specific examples of the aromatic hydrocarbon-based solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte solution may further include vinylene carbonate or an ethylene carbonate-based compound represented by Chemical Formula II in order to improve cycle-life of a battery.

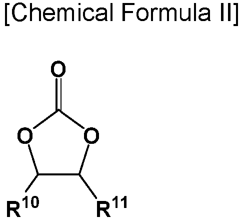

In Chemical Formula II, R¹⁰ and R¹¹ are the same or different and selected from hydrogen, a halogen, a cyano group, a nitro group, and fluorinated C1 to C5 alkyl group, provided that at least one of R¹⁰ and R¹¹ is a halogen, a cyano group, a nitro group, and fluorinated C1 to C5 alkyl group, and R¹⁰ and R¹¹ are not simultaneously hydrogen.

Examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-organic solvent supplies lithium ions in a battery, enables a basic operation of a rechargeable lithium battery, and improves transportation of the lithium ions between positive and negative electrodes.

Examples of the lithium salt include at least one selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide; LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer ranging from 1 to 20, lithium difluoro(bisoxalato) phosphate, LiCl, Lil, LiB(C₂O₄)₂ (lithium bis(oxalato) borate, LiBOB), and lithium difluoro(oxalato)borate (LiDFOB).

The lithium salt may be used in a concentration ranging from 0.1 M to 2.0 M. If the lithium salt is included at the above concentration range, an electrolyte may have excellent performance and lithium ion mobility due to optimal electrolyte conductivity and viscosity.

### Separator

The separator 113 separates a positive electrode 114 and a negative electrode 112 and provides a transporting passage for lithium ions and may be any generally-used separator in a lithium ion battery. In other words, the separator may have low resistance to ion transport and excellent impregnation for an electrolyte solution. For example, the separator may include a glass fiber, polyester, polyethylene, polypropylene, polytetrafluoroethylene, or a combination thereof and may have a form of a non-woven fabric or a woven fabric. For example, in a lithium ion battery, a polyolefin-based polymer separator such as polyethylene and polypropylene is mainly used. In order to ensure the heat resistance or mechanical strength, a coated separator including a ceramic component or a polymer material may be used. Optionally, it may have a mono-layered or multi-layered structure.

### All-solid-state Rechargeable Battery

In one example, an all-solid-state rechargeable battery using the aforementioned positive electrode active material, using a solid electrolyte as an electrolyte, and interposing a solid electrolyte layer between the positive electrode and the negative electrode will be described.

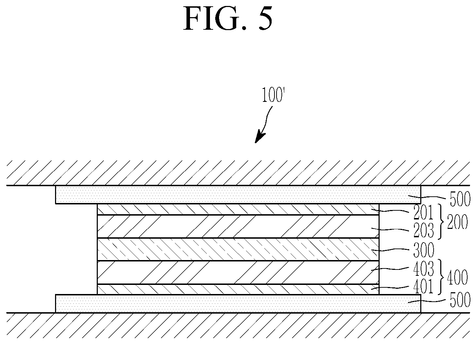

FIG. 5 is a cross-sectional view schematically illustrating an all-solid-state rechargeable battery according to some embodiments. Referring to FIG. 5, the all-solid-state rechargeable battery 100' may have a structure that an electrode assembly, in which a negative electrode 400 including a negative electrode current collector 401 and a negative electrode active material layer 403, a solid electrolyte layer 300, and a positive electrode 200 including a positive electrode active material layer 203 and a positive electrode current collector 201 are stacked, is housed in a battery case. The all-solid-state rechargeable battery 100' may further include at least one elastic layer 500 on the outside of at least either one of the positive electrode 200 and the negative electrode 400. FIG. 5 shows one electrode assembly including the negative electrode 400, the solid electrolyte layer 300, and the positive electrode 200, but two or more electrode assemblies may be stacked to manufacture an all-solid-state rechargeable battery.

### Positive Electrode

The positive electrode for an all-solid-state rechargeable battery may further include a solid electrolyte in addition to the aforementioned positive electrode active material, binder, and conductive material.

### Solid Electrolyte

The solid electrolyte may be an inorganic solid electrolyte such as a sulfide-based solid electrolyte, or an oxide-based solid electrolyte.

In an embodiment, the solid electrolyte may be a sulfide-based solid electrolyte with excellent ionic conductivity. The sulfide-based solid electrolyte particles may include, for example Li₂S-P₂S₅, Li₂S-P₂S₅-LiX (wherein X is a halogen element, for example I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-Si_{S}2-B₂S₃-LiI, Li₂S-SiS₂-P₂S₅-LiI, Li2S-B2S3, Li₂S-P₂S₅-ZₘSₙ (wherein m and n are an integer, respectively, and Z is Ge, Zn, or Ga), Li₂S-GeS₂, Li₂S-SiS₂-Li₃PO₄, Li₂S-SiS₂-LiₚMO_{q} (wherein p and q are integers, and M is P, Si, Ge, B, Al, Ga, or In), or a combination thereof.

Such a sulfide-based solid electrolyte may be obtained by, for example, mixing Li₂S and P₂S₅ in a molar ratio of 50:50 to 90:10 or 50:50 to 80:20 and optionally performing heat-treatment. Within the above mixing ratio range, a sulfide-based solid electrolyte having excellent ionic conductivity may be prepared. The ionic conductivity may be further improved by adding SiS₂, GeS₂, B₂S₃, and the like as other components thereto.

Mechanical milling or a solution method may be applied as a mixing method of sulfur-containing raw materials for preparing a sulfide-based solid electrolyte. The mechanical milling is to make starting materials into particulates by putting the starting materials in a ball mill reactor and fervently stirring them. The solution method may be performed by mixing the starting materials in a solvent to obtain a solid electrolyte as a precipitate. In addition, in the case of heat-treatment after mixing, crystals of the solid electrolyte may be more robust and ionic conductivity may be improved. For example, the sulfide-based solid electrolyte may be prepared by mixing sulfur-containing raw materials and performing heat treatment two or more times. In this case, a sulfide-based solid electrolyte having high ionic conductivity and robustness may be prepared.

The sulfide-based solid electrolyte particles according to some embodiments, for example, may be prepared through a first heat treatment of mixing sulfur-containing raw materials and firing at 120 °C to 350 °C and a second heat treatment of mixing the resultant of the first heat treatment and firing the same at 350 °C to 800 °C. The first heat treatment and the second heat treatment may be performed in an inert gas or nitrogen atmosphere, respectively. The first heat treatment may be performed for 1 hour to 10 hours, and the second heat treatment may be performed for 5 hours to 20 hours. Small raw materials may be milled through the first heat treatment, and a final solid electrolyte can be synthesized through the second heat treatment. Through such two or more heat treatments, a sulfide-based solid electrolyte having high ionic conductivity and high performance can be obtained, and such a solid electrolyte may be suitable for mass production. The temperature of the first heat treatment may be, for example, 150 °C to 330 °C, or 200 °C to 300 °C, and the temperature of the second heat treatment may be, for example, 380 °C to 700 °C, or 400 °C to 600 °C.

For example, the sulfide-based solid electrolyte particles may include argyrodite-type sulfide. The argyrodite-type sulfide may be, for example, expressed by LiₐM_{b}P_{c}S_{d}Aₑ (wherein a, b, c, d, and e are all 0 to 12, M is Ge, Sn, Si, or a combination thereof, A is F, Cl, Br, or I), and as a specific example, it may be be expressed by Li₇₋ₓPS₆₋ₓAₓ (wherein x is 0.2 or more and 1.8 or less, and A is F, Cl, Br, or I). The argyrodite-type sulfide may specifically be Li₃PS₄, Li₇P₃S₁₁, Li₇PS₆, Li₆PS₅Cl, LisPSsBr, Li_{5.8}PS_{4.8}Cl_{1.2}, Li_{6.2}PS_{5.2}Br_{0.8}, and the like.

The argyrodite-type sulfide-based solid electrolyte particle may have high ionic conductivity close to the range of 10⁻⁴ to 10⁻² S/cm, which is the ionic conductivity of general liquid electrolytes at room temperature, and may form an intimate bond between the positive electrode active material and the solid electrolyte without causing a decrease in ionic conductivity, and furthermore, an intimate interface between the electrode layer and the solid electrolyte layer. An all-solid-state rechargeable battery including the same may have improved battery performance such as rate capability, coulombic efficiency, and cycle-life characteristics.

The argyrodite-type sulfide-based solid electrolyte may be prepared, for example, by mixing lithium sulfide and phosphorus sulfide, and optionally lithium halide. Heat treatment may be performed after mixing them. The heat treatment may include, for example, two or more heat treatment steps. The method of preparing the argyrodite-type sulfide-based solid electrolyte may include, for example, a first heat treatment in which raw materials are mixed and fired at 120 °C to 350 °C, and a second heat treatment in which the resultant of the first heat treatment is mixed again and fired at 350 °C to 800 °C.

An average particle diameter (D50) of the sulfide-based solid electrolyte particles may be, for example, 0.1 µm to 5.0 µm, and may be small particles of 0.1 µm to 1.9 µm or large particles of 2.0 µm to 5.0 µm. The average particle diameter of the sulfide-based solid electrolyte particles may be measured using an electron microscope image, and for example, a particle size distribution may be obtained by measuring the size (diameter or length of the major axis) of about 20 particles in a scanning electron microscope image, and D50 may be calculated therefrom.

The solid electrolyte may include an oxide-based inorganic solid electrolyte in addition to a sulfide-based material. The oxide-based inorganic solid electrolyte may include, for example, Li₁₊ₓTi₂₋ₓAl(PO₄)₃ (LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃ (PZT), Pb₁₋ₓLaₓZr_{1-y}Ti_{y}O₃ (PLZT) (0≤x<1, 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0 ≤ x ≤ 1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, Garnet-based ceramics Li₃₊ₓLa₃M₂O₁₂ (wherein M = Te, Nb, or Zr; x is an integer of 1 to 10), or a mixture thereof.

The solid electrolyte may be in a form of particles, and the average particle diameter (D50) may be less than or equal to 5.0 µm, for example, 0.1 µm to 5.0 µm, 0.5 µm to 5.0 µm, 0.5 µm to 4.0 µm, 0.5 µm to 3.0 µm, 0.5 µm to about 2.0 µm, or 0.5 µm to 1.0 µm. Such a solid electrolyte can effectively penetrate between positive electrode active materials, and has excellent contact with the positive electrode active material and connectivity between solid electrolyte particles.

Based on the total weight of the positive electrode active material layer, the solid electrolyte may be included in an amount of 0.1 wt% to 35 wt%, for example 1 wt% to 35 wt%, 5 wt% to 30 wt%, 8 wt% to 25 wt%, or 10 wt% to 20 wt%. Additionally, based on a total weight of the positive electrode active material and solid electrolyte in the positive electrode active material layer, 65 wt% to 99 wt% of the positive electrode active material and 1 wt% to about 35 wt% of the solid electrolyte may be included, and for example, 80 wt% to 90 wt% of the positive electrode active material and 10 wt% to 20 wt% of the solid electrolyte may be included. If the solid electrolyte is included in the positive electrode at this amount, the efficiency and cycle-life characteristics of the all-solid-state battery can be improved without reducing the capacity.

### Negative Electrode

For example, the negative electrode for an all-solid-state rechargeable battery may be the same negative electrode as described for a lithium ion battery.

Or, as another example, the negative electrode for an all-solid-state rechargeable battery may be a precipitation-type negative electrode, unlike the aforementioned negative electrode. The precipitation-type negative electrode does not include a negative electrode active material during battery assembly, but may refer to a negative electrode in which lithium metal, etc. is precipitated or electrodeposited on the negative electrode during battery charging, thereby serving as a negative electrode active material.

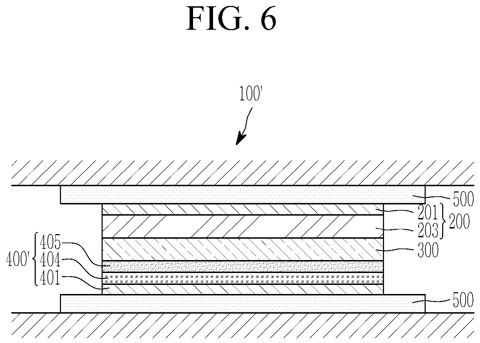

FIG. 6 is a schematic cross-sectional view of an all-solid-state rechargeable battery including a precipitation-type negative electrode. Referring to FIG. 6, the precipitation-type negative electrode 400' may include a current collector 401 and a negative electrode coating layer 405 on the current collector. In an all-solid-state rechargeable battery having such a precipitation-type negative electrode 400', initial charging begins in the absence of negative electrode active material, and during charging, high-density lithium metal is precipitated or electrodeposited between the current collector 401 and the negative electrode coating layer 405 or on the negative electrode coating layer 405 to form a lithium metal layer 404, which can serve as a negative electrode active material. Accordingly, in an all-solid-state rechargeable battery that has been charged at least once, the precipitation-type negative electrode 400' may include, for example, a current collector 401, a lithium metal layer 404 on the current collector, and a negative electrode coating layer 405 on the metal layer. The lithium metal layer 404 may be referred to as a layer in which lithium metal, etc. is precipitated during the charging process of the battery, and may be referred to as a metal layer, lithium layer, lithium electrodeposition layer, or negative electrode active material layer.

The negative electrode coating layer 405 may be referred to as a lithium electrodeposition inducing layer or a negative electrode catalyst layer, and may include a metal, a carbon material, or a combination thereof that acts as a catalyst.

The metal may be a lithiophilic metal, and may include, for example, gold, platinum, palladium, silicon, silver, aluminum, bismuth, tin, zinc, or a combination thereof, and may be composed of one of these or various types of alloys. When the metal exists in particle form, its average particle diameter (D50) may be less than or equal to 4 µm, for example, 10 nm to 4 µm.

The carbon material may be, for example, crystalline carbon, amorphous carbon, or a combination thereof. The crystalline carbon may be, for example, natural graphite, artificial graphite, mesophase carbon microbeads, or a combination thereof. The amorphous carbon may be, for example, carbon black, activated carbon, acetylene black, denka black, ketjen black, or a combination thereof.

When the negative electrode coating layer 405 includes both the metal and carbon material, the mixing ratio of the metal and the carbon material may be, for example, a weight ratio of 1:10 to 2:1. In this case, precipitation of lithium metal can be effectively promoted and the characteristics of the all-solid-state rechargeable battery can be improved. For example, the negative electrode coating layer 405 may include a carbon material on which a catalyst metal is supported, or it may include a mixture of the metal particles and carbon material particles.

For example, the negative electrode coating layer 405 may include the metal and amorphous carbon, and in this case, it can effectively promote precipitation of lithium metal.

The negative electrode coating layer 405 may further include a binder, and the binder may be, for example, a conductive binder. Additionally, the negative electrode coating layer 405 may further include general additives such as a filler, a dispersant, an ion conductive agent.

A thickness of the negative electrode coating layer 405 may be, for example, 100 nm to 20 µm, or 500 nm to 10 µm, or 1 µm to 5 µm.

The precipitation-type negative electrode 400' may further include a thin film, for example, on the surface of the current collector, that is, between the current collector and the negative electrode coating layer. The thin film may include an element capable of forming an alloy with lithium. The element capable of forming an alloy with lithium may be, for example, gold, silver, zinc, tin, indium, silicon, aluminum, bismuth, and the like, which may be used alone or an alloy of more than one. The thin film may further planarize a precipitation shape of the lithium metal layer 404 and much improve characteristics of the all-solid-state rechargeable battery. The thin film may be formed, for example, in a vacuum deposition method, a sputtering method, a plating method, and the like. The thin film may have, for example, a thickness of 1 nm to t 500 nm.

The lithium metal layer 404 may include a lithium metal or a lithium alloy. The lithium alloy may be, for example, a Li-Al alloy, a Li-Sn alloy, a Li-In alloy, a Li-Ag alloy, a Li-Au alloy, a Li-Zn alloy, a Li-Ge alloy, or a Li-Si alloy.

A thickness of the lithium metal layer 404 may be 1 µm to 500 µm, 1 µm to 200 µm, 1 µm to 100 µm, or 1 µm to 50 µm. If the thickness of the lithium metal layer 404 is too thin, it is difficult to perform the role of a lithium storage, and if it is too thick, the battery volume may increase and performance may deteriorate.

When applying such a precipitation-type negative electrode, the negative electrode coating layer 405 may serve to protect the lithium metal layer 404 and suppress the precipitation growth of lithium dendrite. Accordingly, short circuit and capacity degradation of the all-solid-state battery may be suppressed and cycle-life characteristics can be improved.

### Solid Electrolyte Layer

The solid electrolyte layer 300 may include a sulfide-based solid electrolyte, an oxide-based solid electrolyte, and the like. Details on the sulfide-based solid electrolyte and oxide-based solid electrolyte are the same as described above and are therefore omitted.

Meanwhile, an average particle diameter (D50) of the solid electrolyte included in the solid electrolyte layer 300 may be larger than an average particle diameter (D50) of the solid electrolyte included in the positive electrode 200. In this case, overall performance can be improved by maximizing the energy density of the all-solid-state rechargeable battery and increasing the mobility of lithium ions. For example, the average particle diameter (D50) of the solid electrolyte included in the positive electrode 200 may be 0.1 µm to 1.9 µm, or 0.1 µm to 1.0 µm, and the average particle diameter (D50) of the solid electrolyte included in the solid electrolyte layer 300 may be 2.0 µm to 5.0 µm, or 2.0 µm to 4.0 µm, or 2.5 µm to 3.5 µm. When this particle size range is satisfied, the energy density of the all-solid-state rechargeable battery can be maximized and the transfer of lithium ions is facilitated, thereby suppressing resistance and thus improving the overall performance of the all-solid-state rechargeable battery. Herein, the average particle diameter (D50) of the solid electrolyte may be measured through a particle size analyzer using a laser diffraction method.

The solid electrolyte layer may further include a binder in addition to the solid electrolyte. At this time, the binder may be a styrene butadiene rubber, polytetrafluoroethylene, polyvinylidene fluoride, polyethylene, an acrylate polymer, or a combination thereof, but is not limited thereto, and anything used as a binder in the art can be used. The acrylate-based polymer may be, for example, butyl acrylate, polyacrylate, polymethacrylate, or a combination thereof.

The solid electrolyte layer may be formed by adding a solid electrolyte to a binder solution, coating it on a base film, and drying it. The solvent for the binder solution may be isobutyryl isobutyrate, xylene, toluene, benzene, hexane, or a combination thereof. Because the solid electrolyte layer forming process is widely known in the art, detailed description will be omitted.

A thickness of the solid electrolyte layer may be, for example, 10 µm to 150 µm.

The solid electrolyte layer may further include an alkali metal salt, and/or an ionic liquid, and/or a conductive polymer.

The alkali metal salt may be, for example, a lithium salt. A content of the lithium salt in the solid electrolyte layer may be greater than or equal to 1 M, for example, 1 M to 4 M. In this case, the lithium salt may improve ionic conductivity by improving lithium ion mobility of the solid electrolyte layer.

The lithium salt may include, for example, LiSCN, LiN(CN)₂, Li(CF₃SO₂)₃C, LiC₄F₉SO₃, LiN(SO₂CF₂CF₃)₂, LiCl, LiF, LiBr, Lil, LiB(C₂O₄)₂, LiBF₄, LiBF₃(C₂F₅), lithium bis(oxalato) borate (LiBOB), lithium oxalyldifluoroborate (LIODFB), lithium difluoro(oxalato)borate (LiDFOB), lithium bis(trifluoro methanesulfonyl)imide (LiTFSI, LiN(SO₂CF₃)₂), lithium bis(fluorosulfonyl)imide (LiFSI, LiN(SO₂F)₂), LiCF₃SO₃, LiAsF₆, LiSbF₆, LiClO₄ or a mixture thereof.

Additionally, the lithium salt may be an imide-based lithium salt. For example, the imide-based lithium salt may be lithium bis(trifluoro methanesulfonyl)imide (LiTFSI, LiN(SO₂CF₃)₂), or lithium bis(fluorosulfonyl)imide (LiFSI, LiN(SO₂F)₂). The lithium salt may maintain or improve ionic conductivity by appropriately maintaining chemical reactivity with the ionic liquid.

The ionic liquid has a melting point below room temperature, so it is in a liquid state at room temperature and refers to a salt or room temperature molten salt composed of ions alone.

The ionic liquid may be a compound including at least one cation selected from a) ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, and a mixture thereof, and b) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻.

The ionic liquid may be, for example, one or more selected from N-methyl-N-propylpyrrolidinium bis(trifluoromethanesulfonyl)imide, N-butyl-N-methylpyrrolidium bis(3-trifluoromethylsulfonyl) imide, 1-butyl-3-methylimidazolium bis(trifluoromethylsulfonyl)amide, and 1-ethyl-3-methylimidazolium bis(trifluoromethylsulfonyl)amide.

A weight ratio of the solid electrolyte and the ionic liquid in the solid electrolyte layer may be 0.1:99.9 to 90:10, for example, 10:90 to 90:10, 20:80 to 90:10, 30:70 to 90: 10, 40:60 to 90:10, or 50:50 to 90:10. The solid electrolyte layer satisfying the above ranges may maintain or improve ionic conductivity by improving the electrochemical contact area with the electrode. Accordingly, the energy density, discharge capacity, rate capability, etc. of the all-solid-state rechargeable battery may be improved.

An all-solid-state rechargeable battery may be a unit cell with a structure of positive electrode/solid electrolyte layer/negative electrode, a bicell with a structure of negative electrode/solid electrolyte layer/positive electrode/solid electrolyte layer/negative electrode, or a stacked battery in which the structure of the unit cell is repeated.

The shape of the all-solid-state rechargeable battery is not particularly limited, and may be, for example, coin-shaped, button-shaped, sheet-shaped, stacked-shaped, cylindrical, flat, etc. Additionally, the all-solid-state rechargeable battery may also be applied to large batteries used in electric vehicles, etc. For example, the all-solid-state rechargeable battery may also be used in hybrid vehicles such as plug-in hybrid electric vehicles (PHEV). In addition, it may be used in a field requiring a large amount of power storage, and may be used, for example, in an electric bicycle or a power tool. In addition, the all-solid-state rechargeable battery may be used in various fields such as portable electronic devices.

### DETAILED DESCRIPTION OF THE EMBODIMENTS

Hereinafter, examples of the present invention and comparative examples are described. However, the examples are for the purpose of illustration and are not to be construed as limiting the present invention.

### Reference Example 1: Preparation of First Lithium Nickel-based Composite Oxide

### 1. Preparation of First Nickel-based Composite Hydroxide

A first nickel-based composite hydroxide (Ni_{0.945}Co_{0.04}Al_{0.015}(OH)₂), which was a precursor of the first positive electrode active material, was synthesized through a co-precipitation method described later. A mixed solution of metal raw materials was prepared by dissolving nickel sulfate (NiSO₄ · 6H₂O), cobalt sulfate (CoSO₄ · 7H₂O), and sodium aluminum sulfate (NaAl(SO₄)₂ · 12H₂O) in distilled water as a solvent at a molar ratio of 94.5:4:1.5. In addition, aqueous ammonia (NH₄OH) and sodium hydroxide (NaOH) were prepared as a precipitant to form the complex.

### [First Step: 2.5 kW/m³, NH₄OH 0.40 M, pH 10.5 to 11.5, and reaction time of 6 hours]

First, aqueous ammonia having a concentration of 0.40 M was added in a reactor. While a metal raw material mixed solution and a complexing agent (NH₄OH) were added thereto respectively at 85 ml/min and 10 ml/min at 50 °C under a stirring power of 2.5 kW/m³, a reaction was started. While NaOH was added thereto to maintain pH, the reaction was performed for 6 hours. Core particles obtained as a reaction result had an average size of about 6.5 µm to 7.5 µm and then, a second step was performed as follows.

### [Second Step: 2.0 kW/m³, NH₄OH 0.45 M, pH 10.5 to 11.5, and reaction time of 18 hours]

The metal raw material mixed solution and the complexing agent were added thereto respectively at 85 ml/min and 12 ml/min, while the reaction temperature was maintained at 50 °C, so that a concentration of the complexing agent might be 0.45 M. While adding NaOH thereto in order to maintain pH, the reaction was performed for 18 hours. Herein, the reaction was performed by lowering the stirring power by 2.0 kW/m³ than that of the first step. Particles having a core and an intermediate layer produced from this reaction had an average size of 13.5 µm to 14 µm, and then, a third step was performed as follows.

### [Third Step: 1.5 kW/m³, NH₄OH 0.45 M, pH 10.5 to 11.5, and reaction time of 14 hours]

While maintaining the reaction temperature of 50 °C, the input rate of the metal raw material mixed solution and the complexing agent and the concentration of the complexing agent were the same as in second step. While adding NaOH thereto in order to maintain pH, the reaction was performed for 14 hours. At this time, the stirring power was lowered to 1.5 kW/m³, which was lower than the second step, and the reaction proceeds.

### [Post-process]

The result was washed and dried with hot air at about 150 °C for 24 hours to obtain a first nickel-based composite hydroxide (Ni_{0.945}Co_{0.04}Al_{0.015}(OH)₂).

### 2. Preparation of First Lithium Nickel-based Composite Oxide

A first lithium nickel-based composite oxide (LiNi_{0.945}Co_{0.04}Al_{0.015}O₂) was prepared by mixing 100 parts by mole of LiOH based on 100 mols of the first nickel-based composite hydroxide and by performing a heat treatment of increasing to 700 °C under an oxygen atmosphere for 8 hours and maintaining the temperature for 7 hours.

The first lithium nickel-based composite oxide according to Reference Example 1 was confirmed to be in the form of a secondary particle including an interior having an irregular porous structure and an exterior having a radial array structure, wherein the secondary particle was confirmed to have an average particle diameter (D50) of about 14 µ m, which was measured by using a particle size-measuring device using laser diffraction.

### Reference Example 2: Preparation of Second Lithium Nickel-based Composite Oxide

### 1. Preparation of Second Nickel-based Composite Hydroxide

A second nickel-based composite hydroxide (Ni_{0.94}Co_{0.04}Mn_{0.02}(OH)₂), a precursor of a second positive electrode active material, was synthesized through a co-precipitation method described later. First, nickel sulfate (NiSO₄ · 6H₂O), cobalt sulfate (CoSO₄ · 7H₂O), and manganese sulfate (MnSO4 · H2O) in a mole ratio of 94:4:2 were mixed in distilled water as a solvent to prepare a mixed metal raw material solution. In addition, in order to form a complex compound, ammonia water (NH₄OH) and sodium hydroxide (NaOH) as a precipitant were prepared.

Then, the ammonia water at a concentration of 0.25 M was added to a reactor. While the mixed metal raw material solution and the complexing agent were added thereto respectively at 142 ml/min and 34 ml/min at a reaction temperature of 50 °C at a stirring power of 3.0 kW/m³, a reaction was initiated,

The reaction was performed for 30 hours, while NaOH was added thereto to maintain pH. As a reaction result, the obtained core particles reached an average size of 4 µ m, completing the reaction. The resulting material was washed and dried with hot air at about 150 °C for 24 hours, obtaining the second nickel-based composite hydroxide (Ni_{0.94}Co_{0.04}Mn_{0.02}(OH)₂), a precursor of a second positive electrode active material.

### 2. Preparation of Second Lithium Nickel-based Composite Oxide

The second nickel transition metal composite hydroxide and LiOH were mixed in a mole ratio of 1:1 and then, heat-treated at 700 °C for 10 hours under an oxygen atmosphere, obtaining a second lithium nickel-based composite oxide (LiNi_{0.94}Co_{0.04}Mn_{0.02}O₂).

The second lithium nickel-based composite oxide according to Reference Example 2 was confirmed to be in the form of secondary particles in which a plurality of primary particles were agglomerated, wherein the secondary particles had an average particle diameter (D50) of about 3.5 µm, which was measured by using a particle size distribution measuring device using laser diffraction.

### Reference Example 3: Preparation of Third Lithium Nickel-based Composite Oxide

### 1. Preparation of Third Nickel-based Composite Hydroxide

A third nickel-based composite hydroxide (Ni_{0.945}Co_{0.04}Al_{0.015}(OH)₂), a precursor of a third positive electrode active material, was synthesized in a coprecipitation method to be described later. First, a mixed metal raw material solution was prepared by mixing nickel sulfate, cobalt sulfate, and aluminum nitrate (Al(NO₃)₃ · 9H₂O) in a mole ratio of 94.5:4:1.5 in distilled water as a solvent. In addition, in order to form a complex compound, ammonia water (NH₄OH) and a sodium hydroxide (NaOH) aqueous solution as a precipitant were prepared.

After adding a diluted solution of the ammonia water to a continuous reactor, the metal raw material mixed solution was continuously added thereto, and the sodium hydroxide solution was added thereto to maintain pH inside the reactor. A reaction slowly proceeded for about 80 hours, and when the reaction was stabilized, a product overflowing therefrom was collected. The collected product was washed and dried with hot air at about 150 °C for 24 hours, preparing a third nickel-based composite hydroxide (Ni_{0.945}Co_{0.04}Al_{0.015}(OH)₂) in the form of secondary particles in which primary particles were not radially arranged.

### 2. Preparation of Third Lithium Nickel-based Composite Oxide

After mixing 100 parts by mole of LiOH with 100 mols of the third nickel-based composite hydroxide, a heat treatment was performed by increasing the temperature to 730 °C for 5 hours and maintaining the temperature for 7 hours, preparing a third lithium nickel-based composite oxide (LiNi_{0.945}Co_{0.04}Al_{0.015}O₂) in the form of non-radial secondary particles. The secondary particles had an average particle diameter (D50) of about 15 µm which was measured with a particle size distribution measuring device using laser diffraction.

### Reference Example 4: Preparation of Fourth Lithium Nickel-based Composite Oxide

### 1. Preparation of Fourth Nickel-based Composite Hydroxide

A fourth nickel transition metal composite hydroxide (Ni_{0.945}Co_{0.04}Al_{0.015}(OH)₂), a precursor of a fourth positive electrode active material, was synthesized in a coprecipitation method to be described later. A mixed metal raw material solution was prepared by mixing nickel sulfate, cobalt sulfate, and sodium aluminum sulfate in a mole ratio of 94.5:4:1.5 in distilled water as a solvent. In addition, in order to form a complex compound, ammonia water (NH₄OH) and sodium hydroxide (NaOH) as a precipitant were prepared. Subsequently, the fourth nickel transition metal composite hydroxide (Ni_{0.945}Co_{0.04}Al_{0.015}(OH)₂) was prepared substantially the same manner as in Reference Example 2.

### 2. Preparation of Fourth Lithium Nickel-based Composite Oxide

The fourth nickel transition metal composite hydroxide and LiOH were mixed in a mole ratio of 1:1 and then, heat-treated at 700° C for 10 hours under an oxygen atmosphere, obtaining a fourth lithium nickel-based composite oxide (LiNi_{0.945}Co_{0.04}Al_{0.015}O₂). The fourth lithium nickel-based composite oxide was in the form of secondary particles in which a plurality of primary particles were agglomerated, wherein the secondary particles had an average particle diameter (D50) of about 4 µm, which was measured with a particle size distribution measuring device using laser diffraction.

### Example 1

### 1. Preparation of Positive Electrode Active Material

80 wt% of the first nickel-based composite hydroxide (Ni_{0.945}Co_{0.04}Al_{0.015}(OH)₂) according to Reference Example 1 and 20 wt% of the second nickel-based composite hydroxide (Ni_{0.94}Co_{0.04}Mn_{0.02}(OH)₂) according to Reference Example 2 were mixed, and 100 parts by mole of LiOH based on 100 mols of metal of the first nickel-based composite hydroxide and the second nickel-based composite hydroxide was mixed therewith. The obtained mixture was heat-treated by increasing a temperature to 700 °C for 8 hours under an oxygen atmosphere and maintaining the temperature for 7 hours, preparing a final positive electrode active material.

The first positive electrode active material was confirmed to be in the form of secondary particles including an interior having an irregular porous structure and an exterior having a radial array structure. Then, the second positive electrode active material, which was included therein in a weight ratio of 20%, was separated and analyzed by ICP (Inductively Coupled Plasma) emission spectroscopy, was confirmed to be Ni_{0.939}Co_{0.039}Al_{0.006}Mn_{0.016}O₂, in which Al was included, unlike the second nickel-based composite hydroxide used as a raw material.

### 2. Manufacture of Positive Electrode

96 wt% of the obtained positive electrode active material, 2 wt% of polyvinylidene fluoride, 2 wt% of carbon nanotube, and an N-methylpyrrolidone solvent were mixed with a mixer, preparing positive electrode slurry. The slurry was coated on an aluminum foil into an electrode plate and then, dried at 135 °C for 3 hours or more and compressed, manufacturing a positive electrode.

### 3. Manufacturing of Battery Cell

A coin half-cell was manufactured by using the positive electrode and a lithium metal counter electrode and interposing an about 16 µm-thick porous polyethylene film therebetween to manufacture a unit cell and then, inserting the unit cell into a battery case and injecting an electrolyte solution thereinto. The electrolyte solution was prepared by mixing ethylenecarbonate (EC) and ethylmethylcarbonate (EMC) in a volume ratio of 3:5 and dissolving 1.1 M LiPF₆ in the mixed solvent.

### Comparative Example 1

A positive electrode active material, a positive electrode, and a battery cell were manufactured substantially the same manner as in Example 1 except that the fourth nickel-based composite hydroxide of Reference Example 4 instead of the second nickel-based composite hydroxide was used, and 80 wt% of the first nickel-based composite hydroxide (Ni_{0.945}Co_{0.04}Al_{0.015}(OH)₂) and 20 wt% of the fourth nickel-based composite hydroxide (Ni_{0.945}Co_{0.04}Al_{0.015}(OH)₂) of Reference Example 4 was used.

### Comparative Example 2

A positive electrode active material, a positive electrode, and a battery cell were manufactured substantially the same manner as in Example 1 except that in the preparation of the positive electrode active material of Example 1, 0.15 parts by mole of alumina (Al₂O₃) based on 100 mols of total metal of the first nickel-based composite hydroxide and the second nickel-based composite hydroxide was further added, when 100 parts by mole of LiOH was added.

### Comparative Example 3

A positive electrode active material, a positive electrode, and a battery cell were manufactured substantially the same manner as in Example 1 except that the third nickel-based composite hydroxide (Ni_{0.945}Co_{0.04}Al_{0.015}(OH)₂) of Reference Example 3 was used instead of the first nickel-based composite hydroxide (Ni_{0.945}Co_{0.04}Al_{0.015}(OH)₂).

### Comparative Example 4

A positive electrode and a battery cell were manufactured substantially the same manner as in Example 1 except that the positive electrode active material was prepared by mixing 80 wt% of the first lithium nickel-based composite oxide of Reference Example 1 and 20 wt% of the second lithium nickel-based composite oxide of Reference Example 2.

### Comparative Example 5

A positive electrode and a battery cell were manufactured substantially the same manner as in Example 1 except that the positive electrode active material was prepared by mixing 80 wt% of the first lithium nickel-based composite oxide of Reference Example 1 and 20 wt% of the fourth lithium nickel-based composite oxide of Reference Example 4.

### Comparative Example 6

The second nickel-based composite hydroxide of Reference Example 2 and LiOH were mixed in a mole ratio of 1:1, and 0.75 parts by mole alumina (Al₂O₃) based on 100 parts by mole of total metal of second nickel-based composite hydroxide was added thereto and then, heat-treated at 700 °C for 10 hours under an oxygen atmosphere, manufacturing a fifth lithium nickel-based composite oxide (LiNi_{0.933}Co_{0.04}Al_{0.007}Mn_{0.02}O₂). The fifth lithium nickel-based composite oxide was confirmed to be in the form of secondary particles, in which a plurality of primary particles were agglomerated, wherein the secondary particles had an average particle diameter (D50) of about 4.2 µm, which was measured with a particle size distribution measuring device using laser diffraction.

Then, a positive electrode and battery cell was manufactured substantially in the same manner as in Example 1 except that a positive electrode active material was prepared by mixing 80 wt% of the first lithium nickel-based composite oxide according to Reference Example 1 and 20 wt% of the fifth lithium nickel-based composite oxide.

Design contents of the positive electrode active materials according to Reference Examples 1 to 4, Example 1, and Comparative Examples 1 to 6 are briefly shown in Table 1.

**(Table 1)**

| | Large particles | Small particles | Firing | |
|---|---|---|---|---|
| | | | Large particles · Sm all particles | Al addition |
| Reference Example 1 | NCA (radial) | None | Individually fired | None |
| Reference Example 2 | None | NCM | | |
| Reference Example 3 | NCA (non-radial) | None | | |
| Reference Example 4 | None | NCA | | |
| Example 1 | NCA (radial) | NCM | Co-fired | None |
| Comparative Example 1 | | NCA | | None |
| Comparative Example 2 | | NCM | | Total addition |
| Comparative Example 3 | NCA (non-radial) | NCM | | None |
| Comparative Example 4 | NCA (radial) | NCM | Individually fired | None |
| Comparative Example 5 | | NCA | | None |
| Comparative Example 6 | | NCM+Al | | small particles addition |

### Evaluation Example 1: Evaluation of Battery Cell Performance

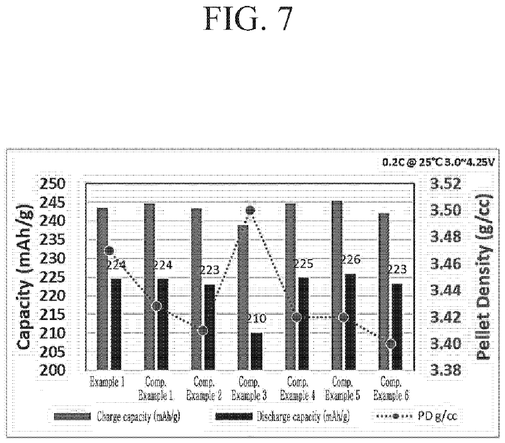

The coin half-cells according to Example 1 and Comparative Examples 1 to 6 were initially charged and discharged by charging at a constant current of 0.2 C to an upper limit voltage of 4.25 V and cutting off at 0.05 C and then, discharging to a cut-off voltage of 3.0 V at 0.2 C at 25 °C. Initial charge capacity (gray bar graph) and initial discharge capacity (black bar graph) are shown in FIG. 7 and Table 2, and a ratio of the initial discharge capacity to the initial charge capacity was shown as efficiency in Table 2.

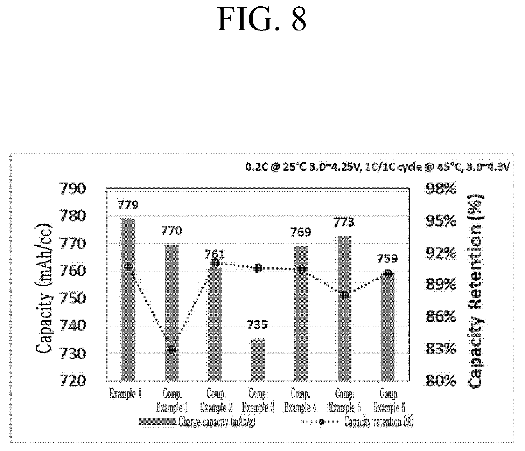

In addition, separately, the coin half-cells according to Example 1 and Comparative Examples 1 to 6 were initially charged to an upper limit voltage of 4.3 V at a constant current of 1 C and then, discharged to a cut-off voltage of 3.0 V at a high temperature of 45 °C, which were 50 times repeatedly. A ratio of discharge capacity at the 50^{th} cycle to the initial discharge capacity (capacity retention) was calculated and then, shown as a dotted line graph (right vertical axis) of Table 2 and FIG. 8.

**(Table 2)**

| | Room temperat ure initial charge capacity (mAh/g) | Room temperatur e Initial discharge capacity (mAh/g) | Room temperature Initial charging and discharging efficiency (%) | High temperat ure 50th capacity retention rate (%) |
|---|---|---|---|---|
| Example1 | 244 | 224 | 92% | 91% |
| Comparative Example1 | 245 | 224 | 92% | 83% |
| Comparative Example2 | 243 | 223 | 92% | 91% |
| Comparative Example3 | 239 | 210 | 88% | 91% |
| Comparative Example4 | 245 | 223 | 91% | 90% |
| Comparative Example5 | 245 | 224 | 91% | 88% |
| Comparative Example6 | 242 | 222 | 92% | 91% |

If a large particle positive electrode active material alone or a small particle positive electrode active material alone was manufactured, the best performance in terms of capacity and cycle-life could be achieved, but there was a problem of failing in realizing high capacity and high energy density due to reduced density of a positive electrode plate. In order to overcome this problem, conventionally, the large particle positive electrode active material and the small particle positive electrode active material were respectively manufactured and then, mixed like in Comparative Examples 4 to 5. However, herein, because small particles were earlier participated in charging than large particles, a higher current than the case of using the small particles alone was applied to the small particles, which rather deteriorated a cycle-life. In order to solve this problem, if the small particles were doped (or coated) with Al like in Comparative Example 6, the cycle-life was improved, but there was still another problem of lowering capacity.

Comparative Example 3, which had the same chemical composition such as nickel and cobalt contents and the like as Example 1 but still adopted a conventional technology of mixing a non-radial secondary particle-shaped large particle NCA precursor and a small particle NCM precursor and then, co-firing the mixture, exhibited very low discharge capacity. Comparative Example 6, which adopted a conventional technology of synthesizing radial large particles NCA alone and mixing them with NCM small particles doped with Al, was confirmed to maintain higher discharge capacity than Comparative Example 3 and equivalent cycle-life thereto.

Example 1, which had similar nickel and cobalt contents to the comparative examples and adopted a method of mixing a large particles NCA precursor in the form of radial secondary particles and a small particles NCM precursor and simultaneously firing the mixture, improved capacity and cycle-life, compared with the conventional technologies of Comparative Examples 3 to 6.

Comparative Example 1, in which both large particles and small particles had the same composition of NCA, exhibited a low cycle-life due to no improvement of structural stability of the small particles, and Comparative Example 2, in which Al doping (or coating) was added to Example 1, as formation of by-reactants of Al and overgrowth of particles were induced, exhibited reduced pellet density as in Evaluation Examples 2 and 3 and thereby, reduced volumetric capacity.

### Evaluation Example 2: Evaluation of Pellet Density (PD)

The positive electrode active materials according to Example 1 and Comparative Examples 1 to 6 were measured with respect to pellet density (g/cc), which are shown as a dotted line graph in Table 3 and FIG. 7. The pellet density was obtained by putting 3 g of each of the positive electrode active materials into a mold for manufacturing a pellet, maintaining it at 3.3 tons for 30 seconds and then, calculating density from a pellet thickness and a diameter of the mold.

### Evaluation Example 3: Evaluation of Volumetric Capacity

The initial discharge capacity at room temperature in Table 2 and the pellet density in Evaluation Example 2 were multiplied to obtain volume capacity, and the results are shown as a bar graph (left vertical axis) of Table 3 and FIG. 8.

**(Table 3)**

| | Pellet density (g/cc) | Volumetric capacity (mAh/cc) |
|---|---|---|
| Example 1 | 3.47 | 779 |
| Comparative Example 1 | 3.43 | 770 |
| Comparative Example 2 | 3.41 | 761 |
| Comparative Example 3 | 3.50 | 735 |
| Comparative Example 4 | 3.42 | 763 |
| Comparative Example 5 | 3.42 | 766 |
| Comparative Example 6 | 3.40 | 755 |

Referring to Table 3 and FIGS. 7 and 8, Example 1, in which NCA large particles and NCM small particles were co-fired, compared with Comparative Example 4, in which the NCA large particles and the NCM small particles were separately fired and then, mixed, was confirmed to exhibit improved pellet density. However, Comparative Examples 1 and 5, in which the large particles and the small particles had the same composition, exhibited slightly improved pellet density. These results confirmed that the co-firing of the radial NCA large particle precursor and the NCM small particle precursor, as in Example 1, improved volume capacity, compared with Comparative Examples 3 to 6, conventional technologies.

### Evaluation Example 4: Evaluation of Small Particle Composition

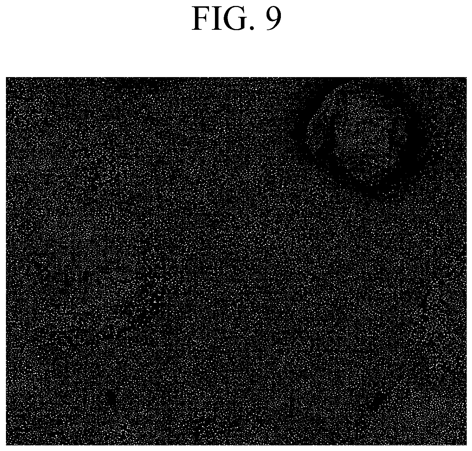

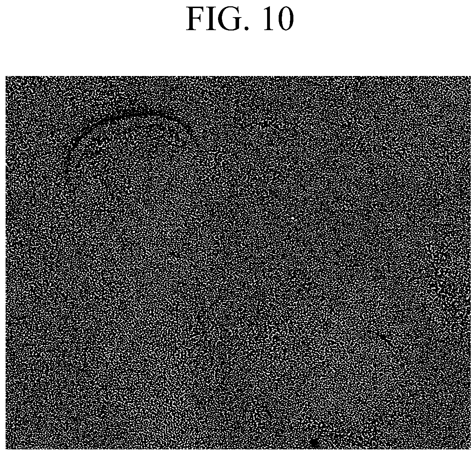

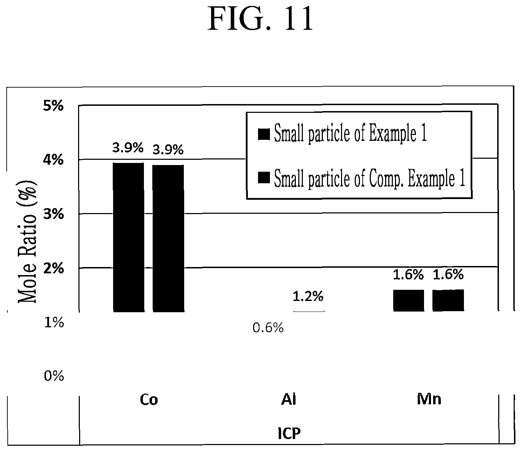

From the final positive electrode active materials prepared in Example 1 and Comparative Example 2, the large particles and the small particles were separated. The separation of the active materials was performed by using a turbo classifier (Nisshin Engineering Inc.) and nitrogen as a transfer gas. FIG. 9 is an SEM image of the separated small particles of Example 1, and FIG.10 is an SEM image of the separated small particles of Comparative Example 2. The two types of small particle positive electrode active materials were analyzed with respect to cobalt, aluminum, and manganese contents through ICP (Inductively Coupled Plasma) emission spectroscopy, and the results are shown in FIG. 11.

If aluminum added in Comparative Example 2 was doped equally on the large particles and the small particles, the small particles used in a weight ratio of 20% should have an Al content of about 0.03 mol%, but the Al content was measured as 1.2 mol%. Accordingly, as in Example 1, even if 0.6 mol% of Al could be received from the large particles NCA, the additionally added Al was confirmed to be more doped on the small particles than the large particles, which was understood to induce formation of by-reactants of Al and overgrowth of the particles and resultantly, reduce the volume capacity. On the other hand, Example 1, in which Al was additionally added, was confirmed that 20 wt% of the small particles NCM were doped with Al at a level of 0.6 mol% by receiving Al from 80 wt% of the large particles NCA. The Al doping of the small particles was regarded to improve cycle-life, compared with Comparative Example 4, in which the particles were simply mixed without the Al doping.

### Evaluation Example 5: Analysis of Cross-section of Positive Electrode Active Material

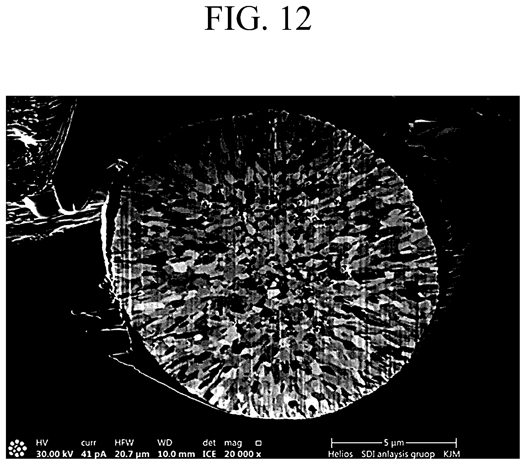

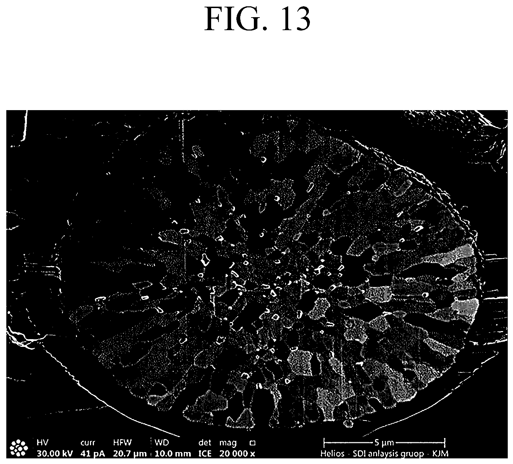

FIG. 12 is an SEM image of a cross-section of the first lithium nickel-based composite oxide particle prepared in Reference Example 1 cut with a focused ion beam (FIB). FIG. 13 is an SEM image of a cross-section of the third lithium nickel-based composite oxide particle prepared in Reference Example 3 cut with FIB. The first lithium nickel-based composite oxide particle, unlike the third lithium nickel-based composite oxide particle, turned out to be a secondary particle formed of small primary particles with a long aspect ratio, wherein the primary particles were well radially aligned toward the surface of the secondary particle.

Accordingly, Example 1 was understood to realize much higher capacity than Comparative Example 3 by using the first positive electrode active material with a radial structure that lithium ions were easily intercalated and deintercalated.

### Evaluation Example 6: Evaluation of Primary Particle Size

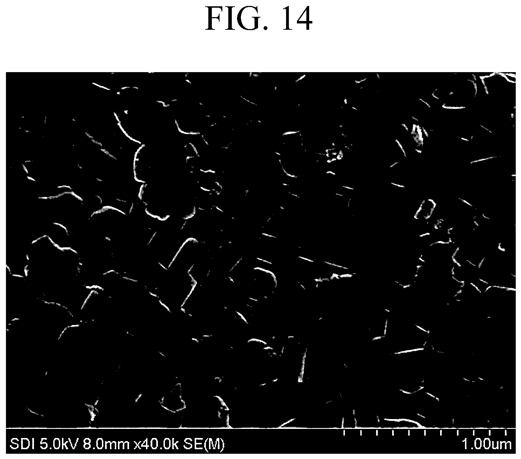

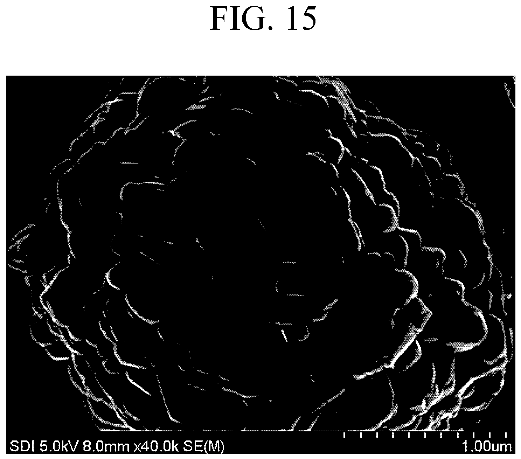

FIG. 14 is an SEM image of the surface of the first lithium nickel-based composite oxide particle prepared in Reference Example 1. FIG. 15 is an SEM image of the surface of the second lithium nickel-based composite oxide particle prepared in Reference Example 2.

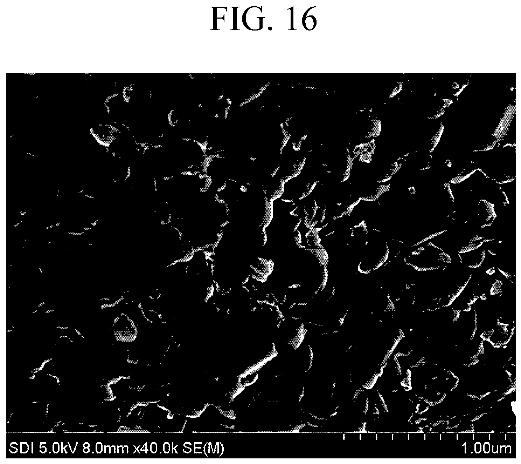

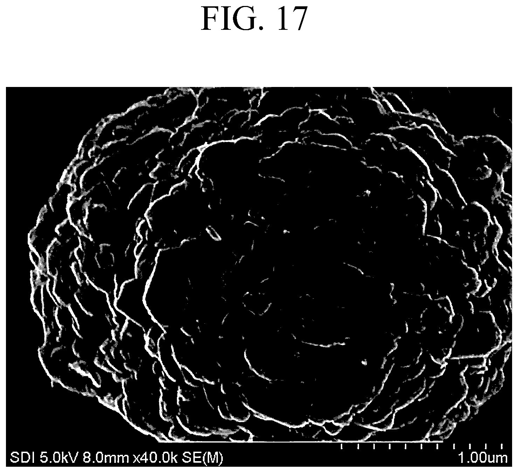

FIG. 16 is an SEM image of the surface of the large particles of Example 1, and FIG. 17 is an SEM image of the surface of the small particles of Example 1.

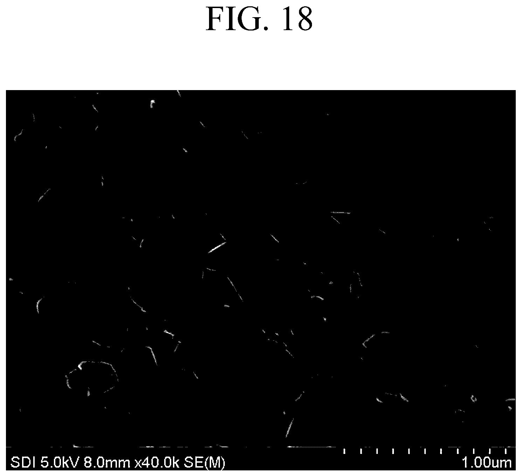

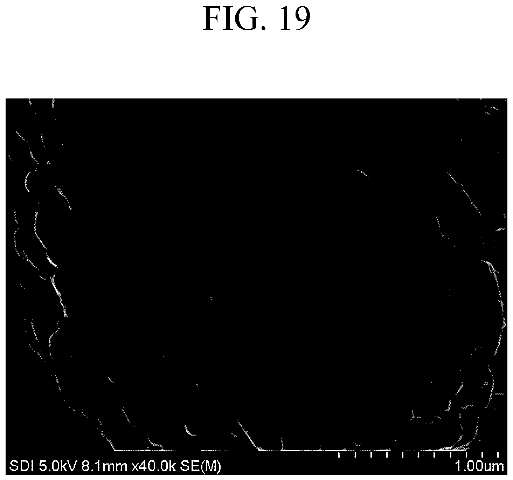

FIG. 18 is an SEM image of the surface of the large particles of Comparative Example 1, and FIG. 19 is an SEM image of the surface of the small particles of Comparative Example 1.

Comparing FIG. 14 and FIG. 16, the large particles of Example 1 shown in FIG. 16, which are the primary particles, exhibited a reduced size, compared with that of the primary particles of Reference Example 1 shown in FIG. 14. Likewise, the small particles of Example 1 shown in FIG. 1, which are primary particles, exhibited a reduced size, compared with the primary particles of Reference Example 2 shown in FIG. 15.

Accordingly, as shown in Evaluation Example 2, compared with the case of separately firing the radial large particle NCA precursor and the small particle NCM precursor and then, mixing them, as in Comparative Example 4, the case of co-firing two precursors after mixing them, as in Example 1, were suppressed from agglomeration of the particles but had low friction among the particles, realizing high pellet density.

On the contrary, the large primary particles of Comparative Example 1 shown in FIG. 18 had a larger size than the primary particles of Reference Example 1 shown in FIG. 14. Likewise, the small primary particles of Comparative Example 1 shown in FIG. 19 had a larger size than the primary particles in the second lithium nickel-based composite oxide of Reference Example 2 shown in FIG. 15.

Accordingly, because the case of co-firing the large particle precursor and the small particle precursor with the same chemical composition as in Comparative Example 1 exhibited overgrowth of the primary particles, Comparative Example 1 exhibited significantly lowered cycle-life, compared with Comparative Example 5 as in Evaluation Example 1, and in addition, as in Evaluation Example 2, the particle agglomeration problem was not improved, failing in improving pellet density.

### Evaluation Example 7: SEM-EDS Evaluation

In order to compare a process of making small particles into NCAM by mixing the radial NCA large particles precursor and the NCM small particles precursor and co-firing the mixture, as in Example 1, with a process of making small particles into NCAM by separately adding Al₂O₃ to dope Al, as in Comparative Examples 2 and 6, the positive electrode active materials prepared in Example 1 and Comparative

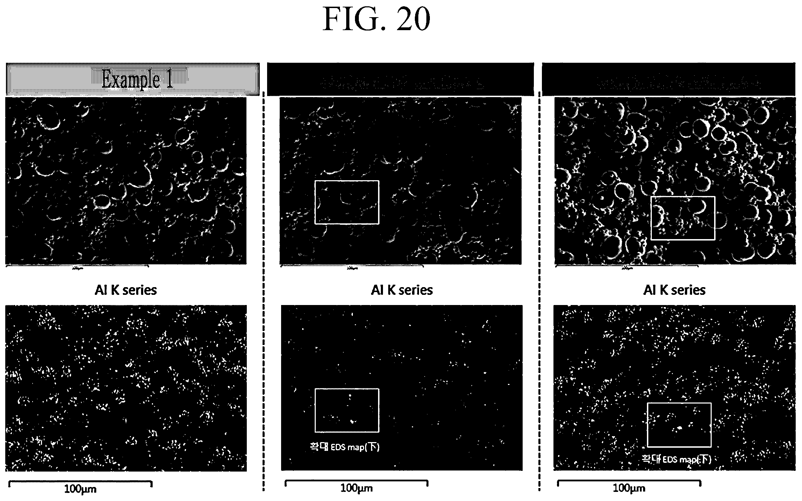

Examples 2 and 6 were taken an image of with SEM, which was used to analyze Al distributions with EDS (Energy Dispersive X-ray Spectrometer), and the results are shown in FIG. 20.

First, referring to the image of Example 1 in FIG. 20, Al was detected on the surface of the small particles as well as the surface of the large particles, which was understood to be caused by movement of the Al component contained in the large particles of NCA toward the small particles of NCM during the firing.

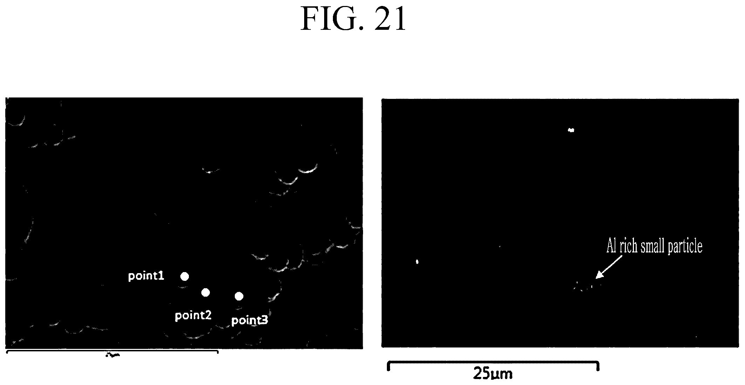

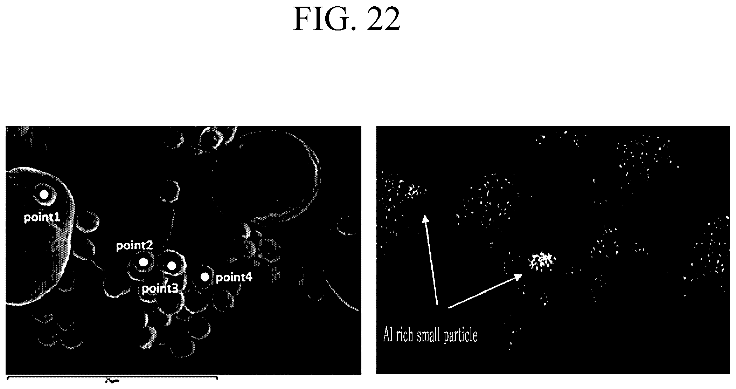

In addition, in FIG. 20, Al was more non-uniformly distributed in Comparative Examples 2 and 6 than Example 1. In order to clearly verify this, non-uniform regions indicated by a white square box in FIG. 20 were enlarged, the enlarged image of the non-uniform region of Comparative Example 2 was shown in FIG. 21, and the enlarged image of the non-uniform region of Comparative Example 6 was shown in FIG. 22. In FIG. 21, contents (element%) of O, Ni, Co, Mn, and Al at Points 1 to 3 on the surface of the small particles (second positive electrode active material) of Comparative Example 2 were analyzed, and the results are shown in Table 4. In addition, in FIG. 22, contents (element%) of O, Ni, Co, Mn, and Al at Points 1 to 4 on the surface of the small particles (second positive electrode active material) of Comparative Example 6 were analyzed, and the results are shown in Table 5.

**(Table 4)**

| Element | Point 1 | Point 2 | Point 3 |
|---|---|---|---|
| O | 69.2 | 67.7 | 67.1 |
| Ni | 28.8 | 28 | 30.6 |
| Co | 1.3 | 1.1 | 1.4 |
| Mn | 0.5 | 0.5 | 0.6 |
| **Al** | **0.2** | **2.7** | **0.3** |

**(Table 5)**

| Element | Point 1 | Point 2 | Point 3 | Point 4 |
|---|---|---|---|---|
| O | 65.4 | 67.9 | 67.3 | 62.3 |
| Ni | 31.3 | 29.7 | 28.6 | 35 |
| Co | 1.4 | 1.3 | 1.3 | 1.4 |
| Mn | 0.6 | 0.6 | 0.5 | 0.7 |
| **Al** | **1.4** | **0.6** | **2.4** | **0.7** |

Referring to the results of Tables 4 and 5, if Al₂O₃ was added for doping, the Al content was non-uniform on the surface of the small particles and doped on one portion of the surface at a high concentration. Accordingly, low capacity of Comparative Examples 2 and 6 was understood to be caused by the small particles doped with Al at a high concentration.

In addition, as the SEM-EDS analysis result, an Mn component was not detected on the surface of the large particles (first positive electrode active material; NCA) according to Example 1. Because aluminum was more easily diffused than manganese at the firing temperature, and in addition, the large particle precursors were radially designed to secure easy movement of ions, as a result, aluminum of the large particles moved to the small particles in Example 1, while manganese of the small particles did not move toward the large particles.

### Evaluation Example 8: TEM-EELS Evaluation

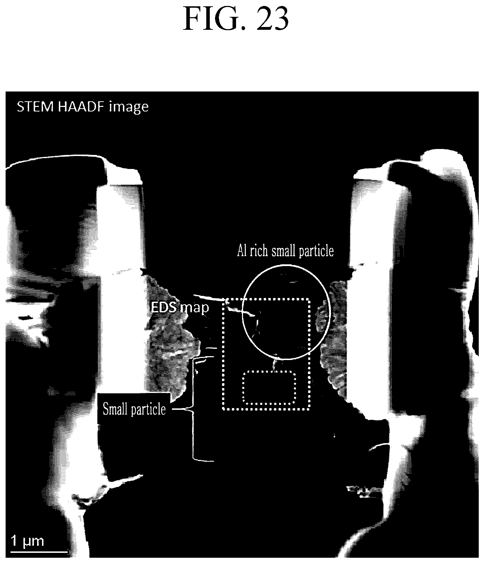

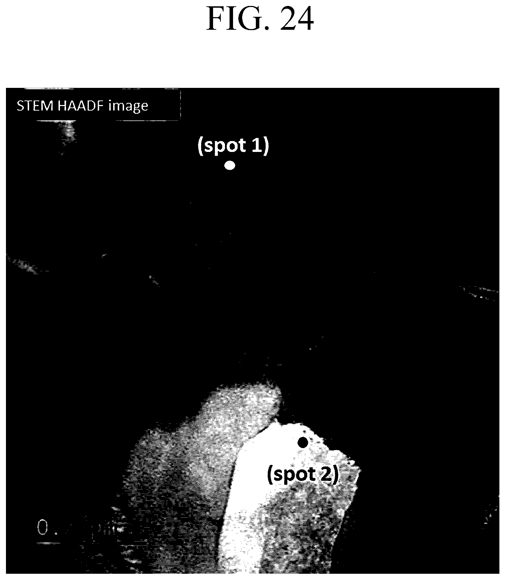

FIG. 23 is a TEM image of the cross-section of small particles of Comparative Example 6. In order to clearly perform EDS analysis, a yellow box region of FIG. 23 was enlarged and shown in FIG. 24. In FIG. 24, as a result of Spot 1 analysis, Al was detected, but Li was not detected. Accordingly, the Spot 1 region was confirmed to be unreacted Al₂O₃. In Spot 2, Li and Ni were detected and confirmed to be a small particles active material.

Referring to these results and the results of Evaluation Example 7, if Al₂O₃ was added as in Comparative Example 6 to prepare an NCAM composition, Al₂O₃ remained as non-reactants, or small particles with a high Al content were produced, deteriorating capacity.

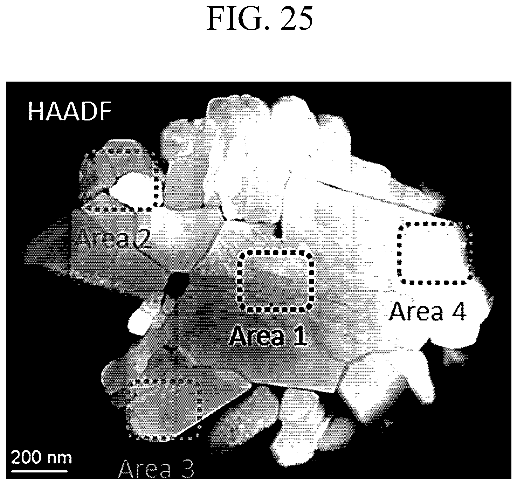

However, in Example 1, such unreacted Al₂O₃ was not found. FIG. 25 is a TEM image of a cross-section of the small particles according to Example 1, which was used to measure contents (element%) of C, O, Al, Mn, Co, and Ni in Area 1, which was an interior of the particles, and Areas 2 to 4, which were surface layers of the particles, through TEM-EELS analysis, and the results are shown in Table 6.

**(Table 6)**

| Element | Area 1 (center) | Area 2 (surface layer) | Area 3 (surface layer) | Area 4 (surface layer) |
|---|---|---|---|---|
| C | 36.95 | 32.11 | 39.7 | 10.05 |
| O | 40.09 | 43.63 | 39.73 | 53.17 |
| Al | 0.09 | 0.09 | 0.21 | 0.54 |
| Mn | 0.48 | 0.34 | 0.35 | 0.5 |
| Co | 1.06 | 1.17 | 0.78 | 1.47 |
| Ni | 21.32 | 22.65 | 19.24 | 34.28 |
| **Al/(Ni+Co+Mn+Al)** | **0.39%** | **0.37%** | **1.02%** | **1.47%** |

Referring to Table 6, Areas 3 and 4 of the small particle surface contacting with the large particles NCA exhibited a high Al content, but Area 2 not contacting with the large particles NCA exhibited a low Al content and also, had a different Al content in the center and on the surface. The reason was understood that Al moved from the large particles NCA and was doped on the small particles of NCM to form NCAM small particles, and accordingly, there were neither small particles excessively doped with Al nor unreacted Al₂O₃, resultantly increasing capacity and improving cycle-life of Example 1.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

**[Description of Symbols]**

| | | | |
|---|---|---|---|
| 11: | secondary particle | | |
| 12: | internal portion of secondary | | |
| 13: | primary particle | | |
| 14: | external portion of secondary particle | | |
| 100: | rechargeable lithium battery | 112: | negative electrode |
| 113: | separator | 114: | positive electrode |
| 120: | battery case | 140: | sealing member |
| 100': | all-solid-state battery | 200: | positive electrode |
| 201: | positive electrode current collector | | |
| 203: | positive electrode active material layer | | |
| 300: | solid electrolyte layer | 400: | negative electrode |
| 401: | negative electrode current collector | | |
| 403: | negative electrode active material layer | | |
| 400': | precipitation-type negative electrode | | |
| 404: | lithium metal layer | | |
| 405: | negative electrode coating layer | | |
| 500: | elastic layer | | |

## Claims

1. A positive electrode active material for a rechargeable lithium battery, comprising
a first positive electrode active material in a form of secondary particles including a lithium nickel-cobalt-aluminum-based composite oxide and formed by agglomerating a plurality of primary particles, wherein at least a portion of the primary particles is oriented radially; and
a second positive electrode active material in a form of secondary particles including a lithium nickel-cobalt-aluminum-manganese-based composite oxide, and formed by agglomerating a plurality of primary particles,
wherein an average particle diameter of secondary particles of the first positive electrode active material is larger than an average particle diameter of the secondary particles of the second positive electrode active material.

2. The positive electrode active material for a rechargeable lithium battery as claimed in claim 1, wherein
an average particle diameter of the secondary particles of the first positive electrode active material is 9 µm to 25 µm, and
an average particle diameter of the secondary particles of the second positive electrode active material is 2 µm to 8 µm.

3. The positive electrode active material for a rechargeable lithium battery as claimed in claim 1, wherein
the second positive electrode active material has a higher aluminum content in a surface layer of the secondary particles than the aluminum content in an internal portion of the secondary particles,
wherein the internal portion of the secondary particle refers to a region from the center of the secondary particle to 70 length% of the radius, and the surface layer of the secondary particle refers to a region surrounding the internal portion, which refers to refer to a region from the outermost surface of the secondary particle to a depth corresponding to 30% of the length of the radius.

4. The positive electrode active material for a rechargeable lithium battery as claimed in claim 3, wherein
the aluminum content in the surface layer of the secondary particle of the second positive electrode active material is 0.2 at% to 2 at% based on a total metal excluding lithium, and
the aluminum content in the internal portion of the secondary particle of the second positive electrode active material is 0 at% to 0.6 at% based on a total metal excluding lithium.

5. The positive electrode active material for a rechargeable lithium battery as claimed in claim 1, wherein
in a surface layer of the secondary particles of the second positive electrode active material, an aluminum content in the portion that is in contact with the first positive electrode active material is higher than an aluminum content in the portion that is not in contact with the first positive electrode active material.

6. The positive electrode active material for a rechargeable lithium battery as claimed in claim 5, wherein
in a surface layer of the secondary particles of the second positive electrode active material, the aluminum content based on a total metal excluding lithium in the portion in contact with the first positive electrode active material is 0.8 at% to 2.0 at%, and the aluminum content based on a total metal excluding lithium in the portion not in contact with the first positive electrode active material is less than 0.8 at%.

7. The positive electrode active material for a rechargeable lithium battery as claimed in claim 1, wherein
the second positive electrode active material includes a high-concentration Al region where the aluminum content is 0.8 at% to 2.0 at% based on a total metal excluding lithium, and a low-concentration Al region where the aluminum content is less than 0.8 at% based on a total metal excluding lithium, in a surface layer of the secondary particles.

8. The positive electrode active material for a rechargeable lithium battery as claimed in claim 7, wherein
a difference between the aluminum content in the high-concentration Al region and the aluminum content in the low-concentration Al region may be 0.3 at% to 2.0 at%.

9. The positive electrode active material for a rechargeable lithium battery as claimed in claim 1, wherein
the lithium nickel-cobalt-aluminum-manganese-based composite oxide of the second positive electrode active material is represented by Chemical Formula 2:
[Chemical Formula 2] Liₐ₂Niₓ₂Co_{y2}Al_{z2}Mn_{w2}M²ᵥ₂O_{2-b2}X_{b2}
wherein, in Chemical Formula 2, 0.9≤a2≤1.2, 0.7≤x2<1, 0<y2<0.3, 0<z2<0.3, 0<w2<0.3, 0≤v2<0.3, 0.9≤x2+y2+z2+w2+v2≤1.1, and 0≤b2≤0.1, M² is one or more element selected from B, Ba, Ca, Ce, Cr, Cu, Fe, Mg, Mo, Nb, Si, Sr, Sn, Ti, V, W, and Zr, and X is one or more element selected from F, P, and S.

10. The positive electrode active material for a rechargeable lithium battery as claimed in claim 1, wherein
the lithium nickel-cobalt-aluminum-based composite oxide of the first positive electrode active material is represented by Chemical Formula 1:
[Chemical Formula 1] Liₐ₁N iₓ₁Co_{y1}Al_{z1}M¹_{w1}O_{2-b1}X_{b1}
wherein, in Chemical Formula 1, 0.9≤a1≤1.2, 0.7≤x1<1, 0<y1<0.3, 0<z1<0.3, 0≤w1<0.3, 0.9≤x1+y1+z1+w1≤1.1, and 0≤b1≤0.1, M¹ is one or more element selected from B, Ba, Ca, Ce, Cr, Cu, Fe, Mg, Mo, Nb, Si, Sr, Sn, Ti, V, W, and Zr, and X is one or more element selected from F, P, and S.

11. The positive electrode active material for a rechargeable lithium battery as claimed in claim 1, wherein
in the secondary particles of the first positive electrode active material, an average particle diameter of the primary particles is less than 200 nm.

12. The positive electrode active material for a rechargeable lithium battery as claimed in claim 1, wherein
the secondary particle of the first positive electrode active material include an internal portion having an irregular porous structure and an external portion having a radially oriented structure as a region surrounding the internal portion.

13. The positive electrode active material for a rechargeable lithium battery as claimed in claim 1, wherein
at least a portion of the primary particles in the secondary particles of the first positive electrode active material has a plate shape, the secondary particles include open pores on the surface, and the open pores are formed by a space between radially oriented plate-shaped primary particles, which are pores connected from the surface of the secondary particle toward the center.

14. The positive electrode active material for a rechargeable lithium battery as claimed in claim 1, wherein
the positive electrode active material includes
60 wt% to 95 wt% of the first positive electrode active material, and
5 wt% to 40 wt% of the second positive electrode active material
based on 100 wt% of the positive electrode active material for a rechargeable lithium battery.

15. A method of preparing a positive electrode active material for a rechargeable lithium battery, comprising
mixing a first positive electrode active material precursor including secondary particles including a nickel-cobalt-aluminum-based composite hydroxide, wherein the secondary particles are formed by agglomerating a plurality of primary particles and at least a portion of the primary particles is oriented radially;
a second positive electrode active material precursor including secondary particles including a nickel-cobalt-manganese-based composite hydroxide, wherein the secondary particles are formed by agglomerating a plurality of primary particles; and
a lithium raw material and
performing heat treatment,
wherein an average particle diameter of the first positive electrode active material precursor is larger than an average particle diameter of the second positive electrode active material precursor.

16. The method of preparing a positive electrode active material for a rechargeable lithium battery as claimed in claim 15, wherein
the nickel-cobalt-aluminum-based composite hydroxide of the first positive electrode active material precursor is represented by Chemical Formula 11, and
the nickel-cobalt-manganese-based composite hydroxide of the second positive electrode active material precursor is represented by Chemical Formula 12:
[Chemical Formula 11] Niₓ₁₁Co_{y11}Al_{z11}M¹¹_{w11}(OH)₂
wherein, in Chemical Formula 11, 0.7≤x11<1, 0<y11<0.3, 0<z11<0.3, 0≤w11<0.3, 0.9≤x11+y11+z11+w11 ≤1.1, and M¹¹ is one or more element selected from B, Ba, Ca, Ce, Cr, Cu, Fe, Mg, Mo, Nb, Si, Sr, Sn, Ti, V, W, and Zr,
[Chemical Formula 12] Niₓ₁₂Co_{y12}Mn_{w12}M¹²ᵥ₁₂(OH)₂
wherein, in Chemical Formula 12, 0.7≤x12<1, 0<y12<0.3, 0<w12<0.3, 0≤v12<0.3, 0.9≤x12+y12+w12+v12≤1.1, M¹² is one or more element selected from B, Ba, Ca, Ce, Cr, Cu, Fe, Mg, Mo, Nb, Si, Sr, Sn, Ti, V, W, and Zr.

17. The method of preparing a positive electrode active material for a rechargeable lithium battery as claimed in claim 15, wherein
an average particle diameter of the secondary particles of the first positive electrode active material precursor is 9 µm to 25 µm, and
an average particle diameter of the secondary particles of the second positive electrode active material precursor is 2 µm to 8 µm.

18. The method of preparing a positive electrode active material for a rechargeable lithium battery as claimed in claim 15, wherein
a mixing weight ratio of the first positive electrode active material precursor and the second positive electrode active material precursor is 60:40 to 95:5.

19. The method of preparing a positive electrode active material for a rechargeable lithium battery as claimed in claim 15, wherein
an aluminum raw material is not mixed during or after mixing a first positive electrode active material precursor, a second positive electrode active material precursor, and a lithium raw material and performing heat treatment.

20. The method of preparing a positive electrode active material for a rechargeable lithium battery as claimed in claim 15, wherein
the heat treatment is performed in a temperature range of 600 °C to 1000 °C.

21. A rechargeable lithium battery, comprising
a positive electrode including the positive electrode active material according to any one of claims 1 to 14,
a negative electrode, and
an electrolyte.

22. The rechargeable lithium battery as claimed in claim 21, wherein
the electrolyte includes a non-aqueous electrolyte solution.

23. The rechargeable lithium battery as claimed in claim 21, wherein
the electrolyte includes a sulfide-based solid electrolyte, and
the rechargeable lithium battery is an all-solid-state rechargeable battery.
